# EUROPEAN PATENT SPECIFICATION

(11) **EP 3 580 056 B1**
(45) Date of publication and mention of the grant of the patent: **13.12.2023**
(21) Application number: 17895853.4
(22) Date of filing: 08.02.2017
(51) Int. Cl.: B27M 3/00, B32B 38/18, E01C 9/08, E04C 2/12, B32B 3/00, B32B 7/03, B32B 21/04, B66C 23/78

(54) **METHOD OF MANUFACTURING A CRANE MAT**
VERFAHREN ZUR HERSTELLUNG EINER KRANMATRATZE
PROCÉDÉ DE FABRICATION D'UN PLATELAGE DE GRUE

(43) Date of publication of application: 18.12.2019
(73) Proprietor: Sterling Site Access Solutions, LLC, Phoenix, IL 60426 (US)
(72) Inventor: STERLING, Carter, Palos Park, IL 60464 (US); STERLING, Cooper, Palos Park, IL 60464 (US); O'CONNELL, Michael, Naperville, IL 60565 (US); STERLING, Christian, Palos Heights, IL 60463 (US); STERLING, Carson, Valparaiso, IN 46385 (US); STERLING, John, Palos Park, IL 60464 (US); RAKE, John, Chicago, IL 60657 (US)
(74) Representative: Bartle Read
(86) International application number: PCT/US2017/017057
(87) International publication number: WO 2018/147847

(56) References cited:
- US-A- 3 722 563
- US-A- 3 782 044
- US-A1- 2016 356 124
- US-A1- 2017 037 581
- LCBT GATEWAY: "Cross Laminated timber LCBT Gateway Animation", , 1 October 2013 (2013-10-01), XP054978970, Retrieved from the Internet: URL:https://www.youtube.com/watch?v=4VvRvu T1LXw [retrieved on 2017-04-05]
- LEDINEK: "Complete production line for CROSS LAMINATED TIMBER CLT by Ledinek", , 24 November 2016 (2016-11-24), XP054978971, Retrieved from the Internet: URL:https://www.youtube.com/watch?v=jokkqS TtM74 [retrieved on 2017-04-05]
- BLACK BROS: Laminating Index Station - Black Bros. Co, 2 August 2012 (2012-08-02), XP054978972, Retrieved from the Internet: URL:https://www.youtube.com/watch?v=DTJG1Y 1eYzA [retrieved on 2017-04-05]
- Sterling Lumber Company: "TerraLam 500 CLT Mat", Access Mats, 20 May 2016 (2016-05-20), pages 1-4, XP009517129, Retrieved from the Internet: URL:https://web.archive.org/web/2016052003 5641/http://www.sterlingcranemats.com/prod ucts/terralamtm-clt-mats/clt-500-series-ma t [retrieved on 2017-04-05]
- KALLESOE: CLT production line from Kallesoe Machinery, 15 April 2015 (2015-04-15), XP054978973, Retrieved from the Internet: URL:https://www.youtube.com/watch?v=BikISh 6Flwo [retrieved on 2017-04-05]
- Anonymous: "What Is Cross Laminated Timber?", XLAM, 15 November 2016 (2016-11-15), XP009516899, Retrieved from the Internet: URL:https://web-beta.archive.org/web/20161 115141418 [retrieved on 2017-04-05]

## Description

### BACKGROUND

This application relates generally to the field of temporary roadways and/or ground protection, and more particularly to crane mats and methods and systems for their manufacture.

The following weblinks show cross-laminated timber manufacturing methods known in the art.

STERLING LUMBER COMPANY: "TerraLam 500 CLT Mat", 1 January 2016, URL:https://web.archive.org/ web/20160520035641/http://www.sterlingcranemats.com/products/terralamtm-clt-mats/clt-500-series-mat, XP009517129;

LCBT GATEWAY: "Cross Laminated timber LCBT Gateway Animation", 1 October 2013, URL:https:// www.youtube.com/watch?v=4VvRvuT1LXw, XP054978970;

KallesoeMachinery: "CLT production line from Kallesoe Machinery", 15 April 2015, URL:https:// www.youtube.com/watch?v=BiklSh6F1wo, XP054978973;

LUDINEK: "Complete production line for CROSS LAMINATED TIMBER CLT by Ledinek", 24 November 2016, URL:https://www.youtube.com/watch?v=jokkqSTtM74; XP054978971;

Black Bros. Co.: "Laminating Index Station - Black Bros. Co.", 2 August 2015, URL:https://www.youtube.com/ watch?v=DTJG1Y1eYzA, XP054978972.

### SUMMARY

The present invention is directed to a method of making a crane mat according to independent claim 1. Particular embodiments of the invention are defined in dependent claims 2-8.

An embodiment of a crane mat useful for understanding the invention is disclosed comprising a plurality of panels positioned in alternating transverse directions with respect to one another. Each of the panels is laminated to an adjacent one of the panels, and each of the panels comprise a plurality of lumber members positioned sided by side. The plurality of lumber members of each panel are oriented in either a longitudinal direction or a transverse direction of the crane mat. The plurality of lumber members in a top panel and a bottom panel of the crane mat are oriented in the transverse direction, which is parallel to a direction of travel of vehicular traffic thereon. In someembodiments, the top and bottom panels include a plurality of spaced apart grooves extending longitudinally from a first longitudinal end of the crane mat to a second longitudinal end of the crane mat for enhancing traction of a vehicle when traversing across the crane mat. The plurality of grooves are positioned longitudinally along a portion of the top and bottom panels of the crane mat. In some embodiments, the crane mat includes an edge protector removably positioned along at least a portion of respective longitudinal sides of the crane mat. The edge protector includes a U-shaped cross section and a plurality of longitudinal protrusions engaging a plurality of grooves in the top and bottom panels.

The plurality of panels may include a softwood species, a hardwood species, or any combination of the softwood and the hardwood species. At least one of the plurality of lumber members in the top and bottom panels may include a hardwood species. At least one of the plurality of lumber members in at least one of the panels positioned between the top and bottom panels may include a softwood species. The hardwood species may include at least one of oak, maple, hickory, hackberry, and cherry, and the softwood species may include at least one of spruce, pine, fir, southern yellow pine, and hemlock.

The plurality of lumber members in at least one of the panels may include a plurality of different widths of lumber positioned side-by-side. At least one of the plurality of lumber members may include a plurality of wooden members fingerjointed together.

The spaced apart grooves in the top and bottom panels may comprise a depth up to at least approximately one half of a thickness of a respective one of the top and bottom panel. The depth of the spaced apart grooves may vary from the first longitudinal end of the crane mat to the second longitudinal end of the crane mat. At least one of the spaced apart grooves comprises a depth that may vary from the first longitudinal end of the crane mat to the second longitudinal end of the crane mat.

The edge protector may include a plastic. The edge protector may include a chamfer positioned along top and bottom longitudinal edges. Each of the longitudinal protrusions of the edge protector may include a trapezoidal cross section to ease installation and removal of the edge protector on the top and bottom panels of the crane mat.

Another embodiment of a crane mat useful for understanding the invention having a longitudinal length is disclosed, including: (a) a first panel comprising a plurality of lumber positioned side by side, the plurality of lumber oriented transverse to the longitudinal length of the crane mat, (b) a second panel positioned on top of the first panel, the second panel comprising a plurality of lumber positionedside by side and transverse to the plurality of lumber of the first panel, the second panel being glued to the first panel, (c) a third panel positioned on top of the second panel, the third panel comprising a plurality of lumber positioned side by side and transverse to the plurality of lumberof the second panel, the third panel being glued to the second panel, (d) a fourth panel positioned on top of the third panel, the fourth panel comprising a plurality of lumber positioned side by side and transverse to the plurality of lumber of the third panel, the fourth panel being glued to the third panel, and (e) a fifth panel positioned on top of the fourth panel, the fifth panel comprising a plurality of lumber positioned side by side and transverse to the plurality of lumberof the fourth panel, the fifth panel being glued to the fourth panel.

Another embodiment of a crane mat useful for understanding the invention having a longitudinal length is disclosed, including: (a) a first panel comprising a plurality of lumber positioned side by side, the plurality of lumber oriented transverse to the longitudinal length of the crane mat, (b) a second panel positioned on top of the first panel, the second panel comprising a plurality of lumber positionedside by side and transverse to the plurality of lumber of the first panel, the second panel being glued to the first panel, (c) a third panel positioned on top of the second panel, the third panel comprising a plurality of lumber positioned side by side and transverse to the plurality of lumberof the second panel, the third panel being glued to the second panel, (d) a fourth panel positioned on top of the third panel, the fourth panel comprising a plurality of lumber positioned side by side and transverse to the plurality of lumber of the third panel, the fourth panel being glued to the third panel, and (e) a fifth panel positioned on top of the fourth panel, the fifth panel comprising a plurality of lumber positioned side by side and transverse to the plurality of lumber of the fourth panel, the fifth panel being glued to the fourth panel. In this embodiment, the first and fifth panels include a plurality of spaced apart grooves extending longitudinally from a first longitudinal end of the crane mat to a second longitudinal end of the crane mat for transporting rain or moisture, or for receiving mud or other debris therein.

Another embodiment of a crane mat useful for understanding the invention having a longitudinal length is disclosed, including: (a) a first panel comprising a plurality of lumber positioned side by side, the plurality oflumber oriented transverse to the longitudinal length of the crane mat, (b) a second panel positioned on top of the first panel, the second panel comprising a plurality of lumber positioned side by side and transverse to the plurality of lumber of the first panel, the second panel being glued to the first panel; (c) a third panel positioned on top of the second panel, the third panel comprising a plurality of lumber positioned side by side and transverse to the plurality of lumber of the second panel, the third panel being glued to the second panel; (d) a fourth panel positioned on top of the third panel, the fourth panel comprising a plurality of lumber positioned side by side and transverse to the plurality of lumber of the third panel, the fourth panel being glued to the third panel; (e) a fifth panel positioned on top of the fourth panel, the fifth panel comprising a plurality of lumber positioned side by side and transverse to the plurality of lumber of the fourth panel, the fifth panel being glued to the fourth panel, and (f) an edge protector removably positioned along respective longitudinal sides of the crane mat, the edge protector comprising a Li-shaped cross section and a plurality of longitudinal protrusions engaging a plurality of grooves in the first and fifth panels, the plurality of grooves positioned along a portionof respective longitudinal sides of the first and fifth panels.

Another embodiment of a crane mat useful for understanding the invention having a longitudinal length is disclosed, including: (a) a first panel comprising a plurality of lumber positioned side by side, the plurality of lumber oriented transverse to the longitudinal length of the crane mat, (b) a second panel positioned on top of the first panel, the second panel comprising a plurality of lumber positioned side by side and transverse to the plurality of lumber of the first panel, the second panel being glued to the first panel, (c) a third panel positioned on top of the second panel, the third panel comprising a plurality of lumber positioned side by side and transverse to the plurality of lumber of the second panel, the third panel being glued to the second panel, (d) a fourth panel positioned on top of the third panel, the fourth panel comprising a plurality of lumber positioned side by side and transverse to the plurality of lumber of the third panel, the fourth panel being glued to the third panel, and (e) a fifth panel positioned on top of the fourth panel, the fifth panel comprising a plurality of lumber positioned side by side and transverse to the plurality of lumber of the fourth panel, the fifth panel being glued to the fourth panel. In this embodiment, the first, second, third, fourth, and fifth panels comprise softwood, hardwood, or any combination of softwood and hardwood species.

Other embodiments of a crane mat useful for understanding the invention, and variations thereto, are disclosed herein. All of the embodiments of a crane mat disclosed herein may be positioned on the ground for use inthe creation of a temporary roadway or platform for vehicles, cranes, construction equipment, and other mobile or stationary machinery. To accommodate relatively wide widths of cranes or other vehicles, crane mats of the instant disclosure are configured for placement on the ground with the long side of each crane mat positioned transverse to the direction of travel of the crane or vehicle thereon. Additional crane mats of the instant disclosure may be positioned in the same orientation with respect to one another, with respective long sides of adjacent crane mats lying adjacent to one another. Crane mats of the instant disclosure may be combined with othermats of different configurations to account for variations in the stability of the ground. For example, crane mats of the instant disclosure may be positioned across timber mats to account for relatively unstable terrain.

An offset pattern can also be created in the field where crane mats of the instant disclosure are all oriented in the same direction but are positioned in a laterally overlapping manner with longitudinal ends of adjacent crane mats positioned offset to one another. The relatively shorter side of the crane mats of the instant disclosure being oriented in the direction of travel of the crane or vehicle best approximates the contour of the ground. As a result, tilting or other undesired movement of each crane mat will be minimized as a crane, for example, travels over a temporary roadway formed from a plurality of crane mats of the instant disclosure. Positioning successive crane mats on the ground with the long sides of each mat positioned adjacent one another and the short sides of each mat oriented in the direction of travel makes it easy for a forklift or crane to quickly install each crane mat sequentially in front of one another by using the prior laid crane mat as the roadway or support for the traversing forklift or crane to enable the forklift or crane to position the next one in line. Crane mats positioned in this orientation on the ground allows for the safe and comfortable passage of cranes and other vehicles on undeveloped ground.

By contrast, orienting multiple crane mats of the instant disclosure side by side to obtain the necessary width to accommodate wide vehicles while orienting the long side of the crane mats in the direction of travel would lead to undesirable tilting, deflection and/or movement of the crane mats as the crane or vehicle travels over the temporary roadway, particularly on ground that slopes upwardly or downwardly in the direction of travel. This orientation will not allow for the safe and comfortable passage of cranes and other vehicles across undeveloped ground.

A method of making a crane mat comprising a length that is longer than a width is disclosed, comprising: (a) vacuum lifting and positioning on an automatically vertically indexing table a first panel to receive a plurality of panels thereon, the first panel comprising a plurality of first lumber members positioned side-by-side, each of the plurality of first lumber members being oriented in a first direction that is parallel to the width, (b) dispensing an adhesive on a top surface of the first panel, (c) vertically positioning the indexing table to receive a second panel, (d) vacuum lifting and positioning the second panel on the top surface of the first panel, the second panel comprising a plurality of second lumber members positioned side-by-side, each of the plurality of second lumber members being oriented in a second direction that is parallel to the length, (f) dispensing an adhesive on a top surface of the second panel, (g) vertically positioning the indexing table to receive a third panel, (h) vacuum lifting and positioning the third panel on the top surface of the second panel, the third panel comprising a plurality of third lumber members positioned side-by-side, each of the plurality of third lumber members being oriented in the first direction, (i) dispensing an adhesive on a top surface of the third panel, (j) vertically positioning the indexing table to receive a fourth panel, (k) vacuum lifting and positioning the fourth panel on the top surface of the third panel, the fourth panel comprising a plurality of fourth lumber members positioned side-by-side, each of the plurality of fourth lumber members being oriented in the second direction, (l) dispensing an adhesive on a top surface of the fourth panel, (m) vertically positioning the indexing table to receive a fifth panel, (n) vacuum lifting and positioning the fifth panel on the top surface of the fourth panel, the fifth panel comprising a plurality of fifth lumber members positioned side-by-side, each of the plurality of fifth lumber members being oriented in the first direction, (o) applying a compressive force to the first, second, third, fourth and fifth panels as a unit until the adhesive is set, and (p) cutting the unit to desired peripheral dimensions.

The method may include the step of vacuum lifting and positioning a divider panel on the indexing table before step (a). The divider panel may be made from a plastic, such as high density polyethylene (HDPE), which impedes the adhesive from sticking to the divider panel. The method may include the step of vacuum lifting and positioning a divider panel on the indexing table after step (n). The method may include repeating steps (a) through (o) at least four times to form a stack of at least five units, wherein each of the units is separated by a divider panel, and applying the compressive force to the stack of at least five units until the adhesive is set. The method may include the step of de-stacking the units before cutting. De-stacking may be performed using a vacuum lift system.

The step of applying a compressive force to the unit may include applying pressure for approximately 25 minutes. The first and the fifth panels may include hardwood lumber and the second, the third, and the fourth panels may include softwood lumber.

The method may include the step of planing a top and a bottom face of each of the first, the second, the third, the fourth, and the fifth lumber members before initiating step (a). The method may include the step of forming the first panel, the second panel, the third panel, the fourth panel, and the fifth panel by positioning the respective plurality of first, second, third, fourth, and fifth lumber members side-by-side.

A high speed manufacturing system for making a crane mat is disclosed, comprising a layer assembler that positions lumber members horizontally side-by-side to form a lumber layer of a desired peripheral size, a robotic assembler comprising (a) a vacuum lifter to lift and position the lumber layer onto an indexer table, wherein the indexer table automatically adjusts a height of the table to receive the lumber layer and a plurality of next lumber layers positioned in sequence vertically thereon and transverse to one another, and (b) an adhesive dispenser to dispense adhesive across each lumber layer, a press to compress at least five lumber layers together as an assembled unit to bond the layers by the adhesive, and a plurality of saws to cut the bonded layers to a finished size while the assembled unit is conveyed past the saws.

The lumber members in respective top and bottom panels may include a hardwood species, and the lumber members in each of the panels positioned between the top and bottom panels may include a softwood species. The press may be one of a plurality of laterally movable presses configured to receive the unit from the robotic assembler.

The system may include a conveyor to continuously convey lumber. The system may include a planer connected to the conveyor to plane the lumber prior to forming the lumber layer. The system may include a primer connected to the conveyor to prime the lumber after planing but prior to forming the lumber layer. The system may include a computer controller comprising a computer processor, a computer readable medium accessible by the processor, and software stored on the computer readable medium for executing the step of controlling the conveyor, the planer, the primer, the robotic assembler, the adhesive dispenser, the press, and the saws.

The press may be configured to apply a compressive force simultaneously to at least 5 assembled units mounted on top of one another. The system may include a layer trimmer configured to trim each of a plurality of longitudinal ends of the lumber members positioned side-by-side to adjust a length of the lumber members to form the lumber layer.

A method of making a crane mat is disclosed, comprising: (1) positioning a plurality of lumber members side by side to form a plurality of panels, (2) positioning a plurality of panels on one another in alternating transverse directions with respect to one another, where the plurality of lumber members in a top panel and a bottom panel are oriented in a transverse direction, and where the plurality of lumber members in at least one panel positioned between the top panel and the bottom panel is oriented in a longitudinal direction, and (3) bonding each of the panels to an adjacent one of the panels with an adhesive.

The plurality of lumber members in the top and bottom panels may include a hardwood species, and the plurality of lumber members in the panels positioned between the top and bottom panels may include a softwood species.

### BRIEF DESCRIPTION OF THE DRAWINGS

Fig. 1A illustrates one embodiment of a crane mat of the instant disclosure.
Fig. 1B illustrates a side end view of the embodiment shown in Fig. 1A.
Fig. 1C illustrates another embodiment of a crane mat of the instant disclosure.
Fig. 1D illustrates a side end view of the embodiment shown in Fig. 1C.
Fig. 1E illustrates another embodiment of a crane mat of the instant disclosure.
Fig. 1F illustrates a side end view of the embodiment shown in Fig. 1E.
Fig. 2A illustrates another embodiment of a crane mat of the instant disclosure.
Fig. 2B illustrates a side end view of the embodiment shown in Fig. 2A.
Fig. 3A illustrates a partial exploded view of another embodiment of a crane mat of the instant disclosure.
Fig. 3B illustrates an unexploded view of the embodiment shown in Fig. 3A.
Fig. 3C illustrates a cross sectional view of the embodiment shown in Fig. 3B.
Figs. 4A and 4B illustrate a block diagram of a method of manufacturing one embodiment of a crane mat of the instant disclosure.
Figs. 5A-1 through 5A-8 illustrate a block diagram of a method of manufacturing at least one embodiment of a crane mat of the instant disclosure.

### DETAILED DESCRIPTION

Although the figures and the instant disclosure describe one or more embodiments of a crane mat, one of ordinary skill in the art would appreciate that the teachings of the instant disclosure would not be limited to these embodiments. For example, the instant disclosure can also apply to access mats and other temporary roadway or ground protection devices.

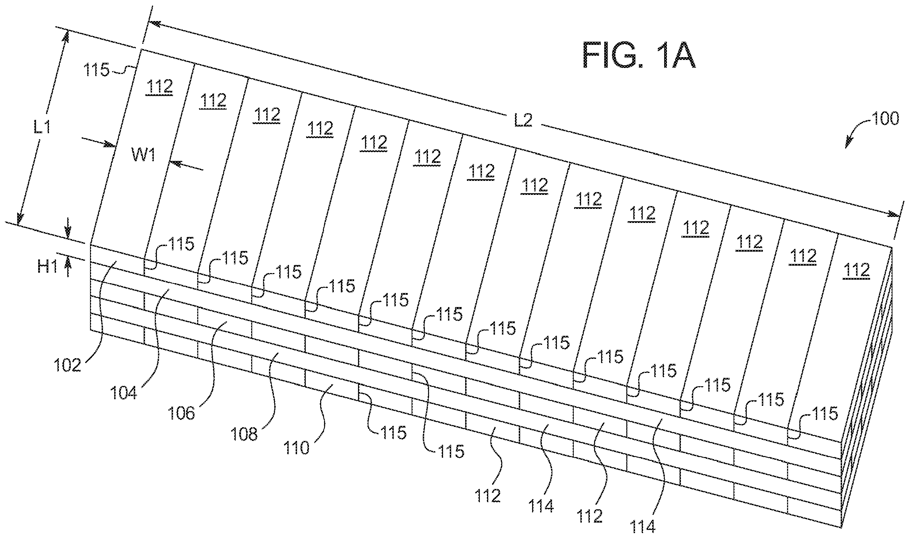

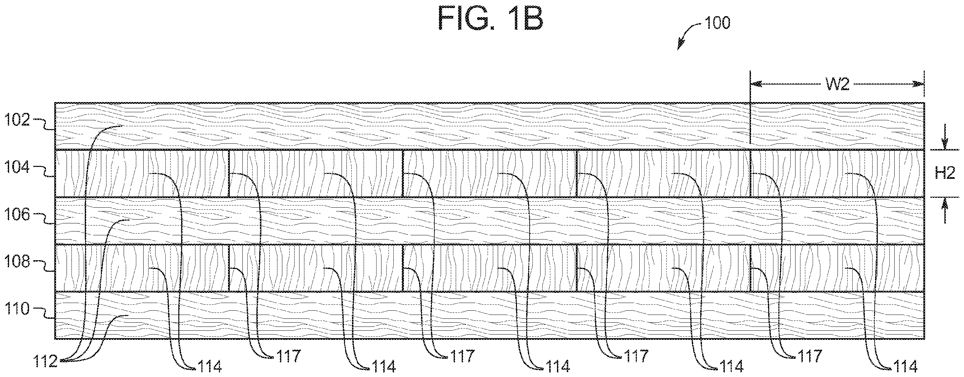

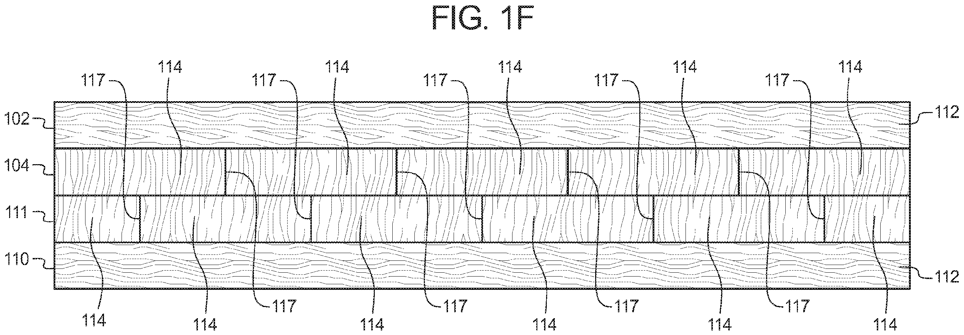

Turning now to the drawings wherein like reference numerals refer to like elements, Figs. 1A-1F, 2A-2B, 3A-3C, and 4A-4B illustrate exemplary embodiments and methods of manufacture of a crane mat comprising a plurality of panels for use in the creation of a temporary roadway or platform for vehicles, cranes, construction equipment, and other mobile or stationary machinery.

As shown in the embodiment of Figs. 1A-B, crane mat **100** includes panels **102**,**104**,**106**,**108**,**110.** In other embodiments, crane mat **100** may be configured with any number of panels from a minimum of one panel to a maximum of thirteen panels to provide a desired strength and/or operating performance. In this embodiment, panel **102** is positioned on top of panel **104**, which is positioned on top of panel **106**, which is positioned on top of panel **108**, which is positioned on top of panel **110**. In other embodiments, panel **110** may be positioned on top of panel **108**, which may be positioned on top of panel **106**, which may be positioned on top of panel **104**, which may be positioned on top of panel **102**. In use, crane mat **100** may be fully reversible, with either of panels **102** or **110** acting as the working surface for receiving vehicles, cranes, construction equipment or other mobile or stationary machinery, and with the other of panels **102** or **110** being configured for placement on, for example, the ground, a roadway, a ramp, a platform or other crane mat or object.

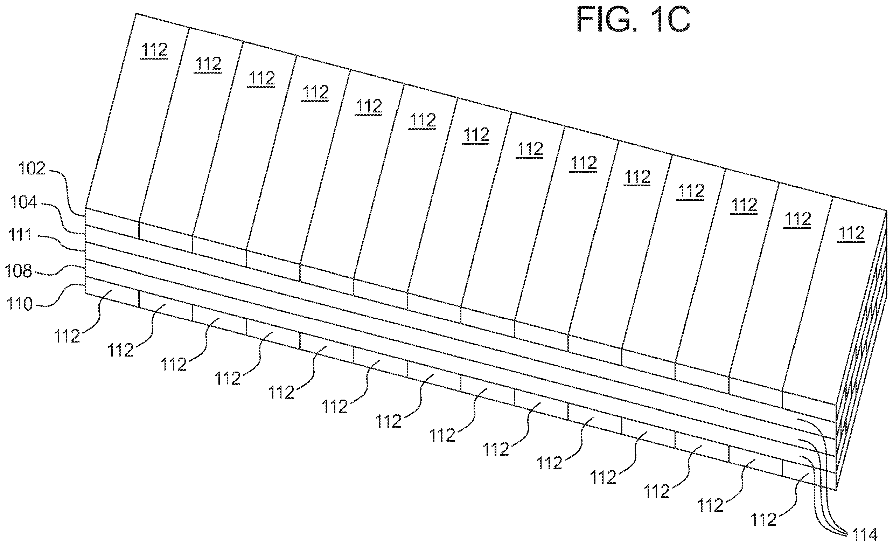

In this embodiment, panel **102** is glued to panel **104**, panel **104** is glued to panel **106**, panel **106** is glued to panel **108**, and panel **108** is glued to panel **110**. In other embodiments, panels **102**, **104**, **106**, **108**, and **110** are connected to one another using bolts, screws, straps, clips, or other fastening or joining techniques or any combination of them. In this embodiment, each of panels **102**,**106**,**110** is oriented in a first direction and panels **104**,**108** are oriented in a second direction approximately 90 degrees relative to panels **102**,**106**,**110.** In other embodiments, panels **102**,**104**,**106**,**108**, and **110** may be oriented at any angle relative to one another, including all panels lying in the same direction, to provide a desired strength and/or operating performance of crane mat **100**. In one embodiment, at least two adjacent panels of the crane mat are aligned in approximately the same direction (see, e.g., Figs. 1C-1F). The overall strength and rigidity of crane mat **100** is likely maximized, however, by alternating the direction of respective adjacent panel layers.

In this embodiment, each of panels **102**,**106**,**110** includes a plurality of members **112** positioned side-by-side along respective side ends **115**. Each member **112**, and particularly each side end **115** of each member **112**, is oriented in the first direction. For purposes of this disclosure, the first direction is oriented parallel to the general direction of travel of vehicular traffic on crane mat **100**. As shown in Figs. 1A-1B, the length "L1" of each member **112** is longer than a width "W1" of each member **112**, and the width of each member **112** is longer than a depth or height "H1" of each member **112**. Although members **112** are shown in the figures as being of the same length "L1," in other embodiments, for each member **112**, the length "L1" thereof may comprise a plurality of separate members that together result in achieving the length "L1" for each member **112**. In addition, it should be understood that the combination of members that form each member **112** may vary in length from one to another. Such combination of members forming each member **112** in such other embodiments may be spliced or joined together using any number of techniques, including fingerjointing, lap jointing, rabbit jointing, tongue and groove jointing, miter joining and the like, or they may simply be positioned adjacent one another to form a butt joint. In this way, pieces of lumber having differing lengths can be pieced together to form each member **112**.

In this embodiment, each of panels **104**,**108** includes a plurality of members **114** positioned side-by-side along respective side ends **117**. Each member **114**, and particularly each side end **117** of each member **114**, is oriented in the second direction. As shown in Figs. 1A-1B, the length "L2" of each member **114** is longer than a width "W2" of each member **114**, and the width of each member **114** is longer than a depth or height "H2" of each member **114**. Consequently, in this embodiment, the length of each member **114** of each of panels **104**,**108** is oriented in the second direction, which is 90 degrees relative to the first direction and transverse to the general direction of travel of vehicular traffic on crane mat **100**. In addition, as shown in Figs. 1A-1B, in this embodiment, the length of members **114** is greater than the length of members **112**, whereas the width and height of members **114** and members **112** are approximately the same as one another. Although members **114** are shown in the figures as being of the same length "L2," in other embodiments, for each member **114**, the length "L2" thereof may comprise a plurality of separate members that together result in achieving the length "L2" for each member **114**. In addition, it should be understood that the combination of members that form each member **114** may vary in length from one to another. Such combination of members forming each member **114** in such other embodiments may be spliced or joined together using any number of techniques, including fingerjointing, lap jointing, rabbit jointing, tongue and groove jointing, miter joining and the like, or they may simply be positioned adjacent one another to form a butt joint. In this way, pieces of lumber having differing lengths can be pieced together to form each member **114**.

In this embodiment, members **114** are generally aligned in a longitudinal direction (i.e., the second direction) of crane mat **100**, and members **112** are generally aligned transverse (i.e., in the first direction) to members **114**. Thus, in this embodiment, the length of members **114** defines the longitudinal length of crane mat **100,** and the length of members **112** defines the transverse width of crane mat **100,** where length "L2" is longer than length "L1". For vehicular traffic moving across crane mat **100** in the first direction and transverse to the longitudinal direction of crane mat **100,** members **112** of panel **102** (or panel **110** if oriented upside down as compared to the orientation shown in Figs. 1A-1B) will be oriented to maximize resistance to wear and damage that may be caused by vehicular traffic over crane mat **100,** resulting in longer crane mat life and reduced costs. In other words, vehicular traffic coming upon crane mat **100** will strike a longitudinal end of various members **112** in panel **102** (or panel **110** if oriented upside down) where the end grain of the lumber is exposed. The end grain of members **112** provides superior resistance to wear and tear from vehicle traffic, and particularly in comparison to vehicle movement in the second, longitudinal direction of crane mat **100.** In addition, because the majority of the panels in crane mat **100** comprise members **112** having length "L1" that is shorter than members **114** having length "L2", crane mat **100** may contour to the actual surface of the ground, and will result in a lower weight crane mat that reduces shipping costs.

In one embodiment, crane mat **100** is configured to be approximately 4 feet (1.2m) wide in the first, transverse direction and 16 feet (4.9m) long in the second, longitudinal direction. In another embodiment, crane mat **100** is configured to be approximately 4 feet (1.2m) wide in the first, transversedirection and 18 feet (5.5m) long in the second, longitudinal direction. In another embodiment, crane mat **100** is configured to be approximately 4 feet (1.2m) wide in the first, transverse direction and 20 feet (6.1m) long in the second, longitudinal direction. In another embodiment, crane mat **100** is configured to be approximately 4 feet (1.2m) wide in the first, transverse direction and 22 feet (6.7m) long in the second, longitudinal direction. In yet another embodiment, crane mat **100** is configured to be approximately 4 feet (1.2m) wide in the first, transverse direction and 24 feet (7.3m) long in the second, longitudinal direction. In other embodiments, crane mat **100** may have a width that is smaller or larger than 4 feet (1.2m) and a length that is shorter or longer than 16 feet (4.9m). In use, multiple crane mats**100** may be abutted adjacent one another or attached to one another along the long side of crane mat **100** to orient the short side of crane mat **100** and particularly members **112** so as to be positioned in the direction of vehicle movement. In this way, the long side of the crane mat ispositioned to accommodate wide vehicles traveling parallel to the orientation of members **112.**

In other embodiments, crane mat **100** is configured to be approximately 8 feet (2.4m) wide in the first, transverse direction and either 14 (4.3m), 16 (4.9m), or 18 feet (5.5m) long in the second, longitudinal direction. In some embodiments, the top layer and the bottom layer of crane mat **100** may be configured with hardwood dimensional lumber that is 8 feet (2.4m) long positioned side-by-side and oriented in the first, transverse direction until the desired 14 (4.3m), 16 (4.9m), or 18 (5.5m) feet long in the second, longitudinal direction is obtained. Each one of a pair of longitudinally-oriented intermediate layers comprising softwood dimensional lumber is positioned immediately adjacent respective top and bottom hardwood layers. In these intermediate layers, softwood dimensional lumber that is either 14 (4.3m), 16 (4.9m), or 18 (5.5m) feet long (depending on the desired width of the crane mat) is oriented in the second, longitudinal direction side-by-side until the desired depth, such as 8 feet,is obtained. For a 5-layer crane mat **100,** a third intermediate (middle) layer comprising softwood dimensional lumber is positioned immediately adjacent and between the two longitudinally-oriented intermediate layers. The third intermediate (middle) layer comprises softwood dimensional lumber that is 8 feet (2.4m) long positioned side-by-side and oriented in the first, transverse direction until the desired 14 (4.3m), 16 (4.9m), or 18 (5.5m)feet long in the second, longitudinal direction is obtained. The respective layers of crane mat **100** may be glued to one another and pressed together to form a unitary structure. Excess material may be sawed and/or trimmed from all fourperimeter sides to obtain uniform dimensions from one crane mat **100** to the next. The top and/or bottom perimeter edges of crane mat **100** may include a chamfer to minimize damage to crane mat **100** due to loading, handling, and usage in field. A single 8 ft (2.4m) x 16 ft (4.3m) or 18 ft (5.5m) 5-layercrane mat **100** may be sawn in half to obtain two 4 ft (1.2m) x 16 ft (2.4m) or 18 ft (5.5m) 5-layer crane mats **100**.

In some embodiments, members **112** are glued or otherwise adhered to one anotheralong respective side ends **115,** and members **114** are glued or otherwise adhered to one another along respective side ends **117.** In other embodiments, members **112** are connected toone another, and members **114** are connected to one another, using bolts, screws, straps, clips,or other fastening or joining techniques or any combination of them.

In this embodiment, each of members **112** is approximately the same geometry as one another in terms of width, depth, and length. In other embodiments, the width, depth and/or length of members **112** may vary from one to another but may be machined to form finished panels **102**,**106**, **11O** for crane mat **100.** In this embodiment, each of members **114** is approximately the same geometry as one another in terms of width, depth, and length. In some embodiments, the width, depth and/or length of members **114** may vary from one to another butmay be machined to form finished panels **104,108** for crane mat **100.**

In some embodiments, members **112,114** may include dimensional lumber, including1x4, 1x6, 1x8, 1x10, 1x12, 2x4, 2x6, 2x8, 2x10, and 2x12. In some embodiments, for any givenpanel, members **112,114** may comprise the same width of lumber positioned side-by-side to create the panel. In other embodiments, for any given panel, members **112,114** may comprise different or variable widths of lumber positioned side-by-side to create the panel. In yet other embodiments, for any given panel, members **112,114** may comprise any combination of the same and different widths of lumber positioned side-by-side to create the panel. Members **112,114** of one or more panels of crane mat **100** may include softwood lumber comprising, for example, spruce, pine, fir, southern yellow pine, or hemlock, hardwood lumber comprising, for example, oak, maple, hickory, hackberry, or cherry, or any combination of softwood or hardwood. For any given member **112,114,** a hardwood species, such as oak, may lie adjacent to a different hardwood species, such as hickory, and a softwood species, such as pine, may lie adjacent to a different softwood species, such as fir. In some embodiments, a hardwood panel comprising members **112 or 114** may comprise hardwood lumber 1 inch (0.025m) thick with lumber comprising different widths positioned side-by-side. In other embodiments, a softwood panel comprising members **112 or 114** may comprise softwood lumber 2 inches (0.05m) thick with lumber comprising different widths positioned side-by-side. In some embodiments, a panel made of one or more hardwood species of lumber may be positioned adjacent above or below and gluedto a panel made of one or more softwood species of lumber. In other embodiments, members **112,114** may include any material in any stock dimension suitable for creating a temporary roadway, including a plastic, a composite, or a metal.

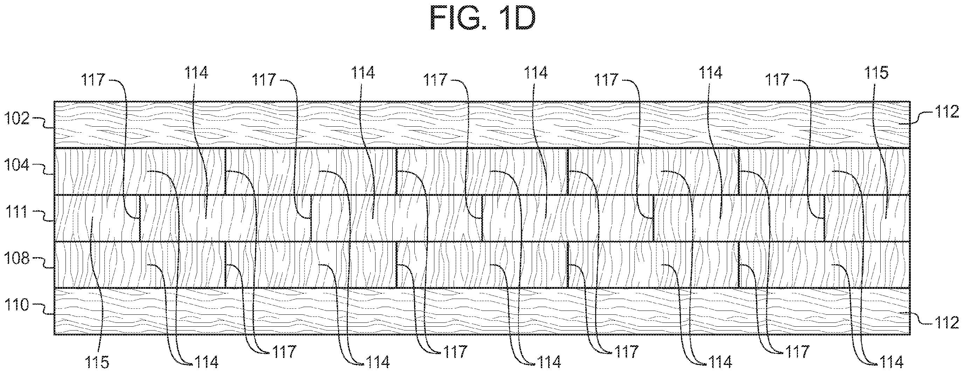

Turning to Figs. 1C-1D, there is shown another embodiment of crane mat **100.** In particular, panel **106** is replaced by panel **111** having a plurality of members **114** positioned side-by-side along respective side ends **117.** Each member **114** of panel **111** is oriented in a longitudinal direction (i.e., the second direction) of crane mat **100.** However, as shown in Fig. 1D, each of members **114** of panel **111** are positioned laterally offset in the first direction relative to respective members **114** in adjacent panels **104,108.** The offset side ends **117** of members **114** of respective panels **104,111,108** provide enhanced lateral stiffness of crane mat **100** in the first direction while permitting enhanced longitudinal flexibility in the second direction than the embodiment of crane mat **100** shown in Figs. 1A-1B.

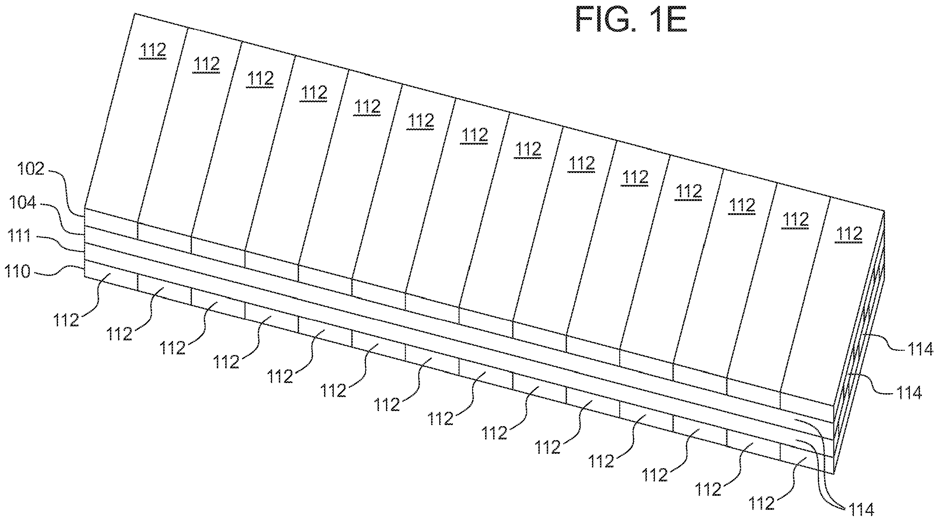

Figs. 1E-1F show yet another embodiment of crane mat **100.** In this embodiment, panels **106,108** are replaced in their entirety by panel **111** having a plurality of members **114** positioned side-by-side along respective side ends **117** to form a four panel embodiment of crane mat **100.** Like the embodiment shown in Figs. 1C-1D, each member **114** of panel **111** is oriented in a longitudinal direction (i.e., the second direction) of crane mat **100.** Similarly, each of members **114** of panel **111** are positioned laterally offset in the first direction relative to respective members **114** in adjacent panel **104.** The offset side ends **117** of members **114** of respective panels **104,111** provide enhanced lateral stiffness of crane mat **100** while permitting enhanced longitudinal flexibility than the embodiment of crane mat **100** shown in Figs. 1C-1D. In addition, in applications where increased longitudinal flexibility is desired over the embodiment shown in Figs. 1C-1D, the embodiment of Figs. 1E-1F provides the added benefits of: (1) reduced fabrication costs due to less material and fewer manufacturing processes needed to produce crane mat **100**; (2) reduced transportation costs due to lighter weight finished product and smaller finished product volume, which permits shipping more crane mat units in a single freight transportation container, and (3) easier handling by users due to lighter weight of the finished product.

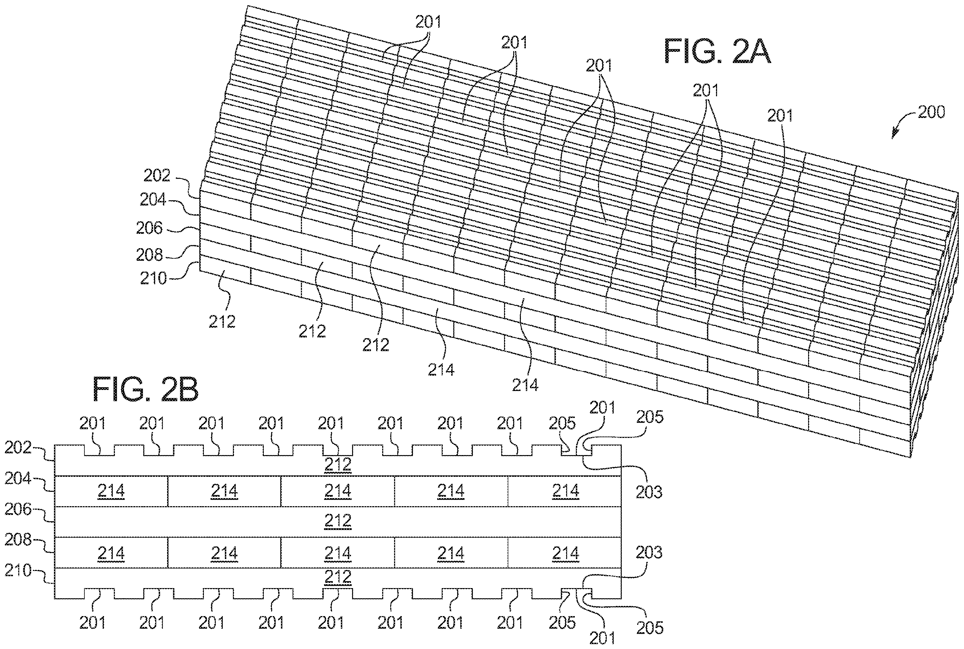

Turning to Figs. 2A-2B, there is shown another embodiment of a crane mat. Crane mat **200** includes all of the same features, characteristics, and variations described above for crane mat **100** with the addition of a plurality of slots or grooves **201** disposed on the top panel **202** and/or bottom panel **210** of crane mat **200** for enhancing vehicle traction when traversing across crane mat **200** parallel to the orientation of members **212**. In this embodiment, panels **202,204,206,208,210** of crane mat **200** are identical to panels **102**,**104**,**106**,**108**,**110** of crane mat **100** except that panel **202** is shown as including grooves **201** disposed thereon. In some embodiments, crane mat **100** may include grooves **201** as described in more detail below.

As best shown in Fig. 2B, grooves **201** may comprise generally vertical opposing sidewalls **205** and a generally horizontal bottom wall **203**. In other embodiments, grooves **201** may comprise a U-shape (with or without a rounded bottom wall), a V-shape, a trapezoidal shape, a semi-circular shape, or any other shape or combination thereof that enhances vehicle traction. In this embodiment, crane mat **200** includes 9 slots or grooves **201** positioned on top panel **202** (and bottom panel **210** to provide reversibility of crane mat **200)**, though a greater or fewer quantity of grooves **201** are possible.

Grooves **201** may comprise any width and any spacing that permits a desired number of grooves **201** to be positioned on panel **202**,**210**. Grooves **201** may comprise any depth up to at least approximately one half of the thickness of panel **202**. In one embodiment, grooves **201** comprise a depth from about 0.100" to about 0.75". In one embodiment, grooves **201** comprise a depth of about 0.25" +/- 0.150". In another embodiment, grooves **201** comprise a depth of about 0.50". In another embodiment, grooves **201** comprise a depth of about 0.75". Grooves may vary in depth from one end of crane mat **200** to another end of crane mat to enhance drainage of water from crane mat **200**. Grooves **201** may also vary in depth from any point along crane mat **200** relative to any other point along crane mat **200**. For example, the depth of grooves **201** may be more shallow in the middle of crane mat **200** and progressively deeper toward the periphery to enhance drainage of water from crane mat **200**.

In this embodiment, grooves **201** are generally aligned in a longitudinal direction of crane mat **200** and transverse to members **212**, which are generally aligned transverse to members **214**. In this embodiment, the length of members **214** defines the longitudinal length of crane mat **200**, and the length of members **212** define the transverse width of crane mat **200**. For vehicular traffic moving across crane mat **200** parallel to the orientation of members **212** (i.e., in the first direction) and transverse to the longitudinal direction of crane mat **200**, transversely aligned members **212** of panel **202** (or panel **210** if grooves **201** are also positioned thereon and if panel **210** is oriented upside down as compared to the orientation shown in Figs. 2A-2B) will be oriented to maximize resistance to wear and damage that may be caused by vehicular traffic over crane mat **200** while grooves **201** provide for rain, moisture, mud or other debris to collect therein and drain therefrom to enhance traction of the vehicle. In other embodiments, grooves **201** may be oriented in any angle on panel **202** and/or **210**. In some embodiments, the angle of grooves **201** relative to other grooves **201** form a pattern on panel **202** and/or **210**.

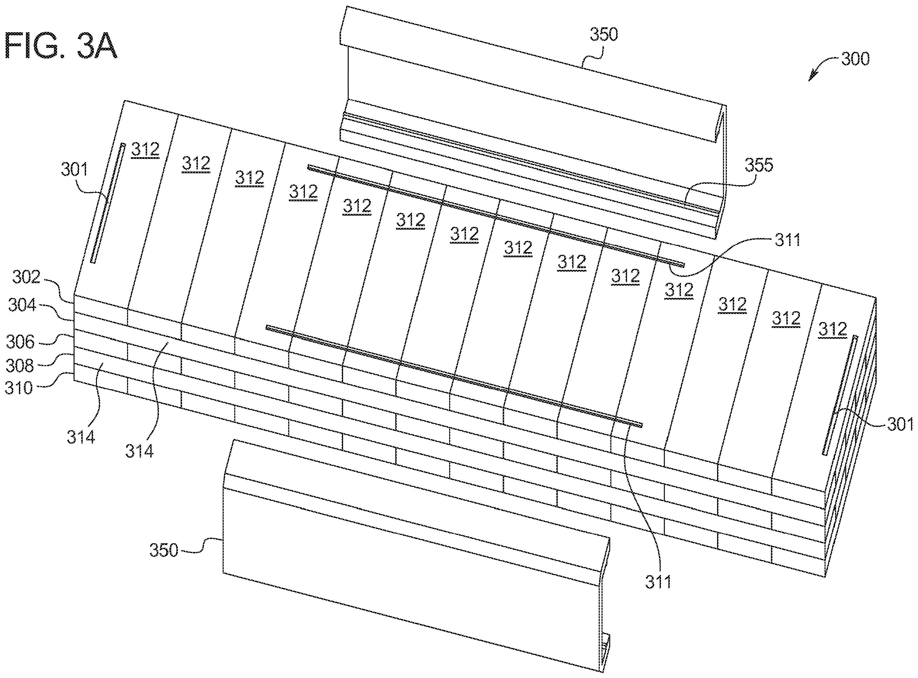

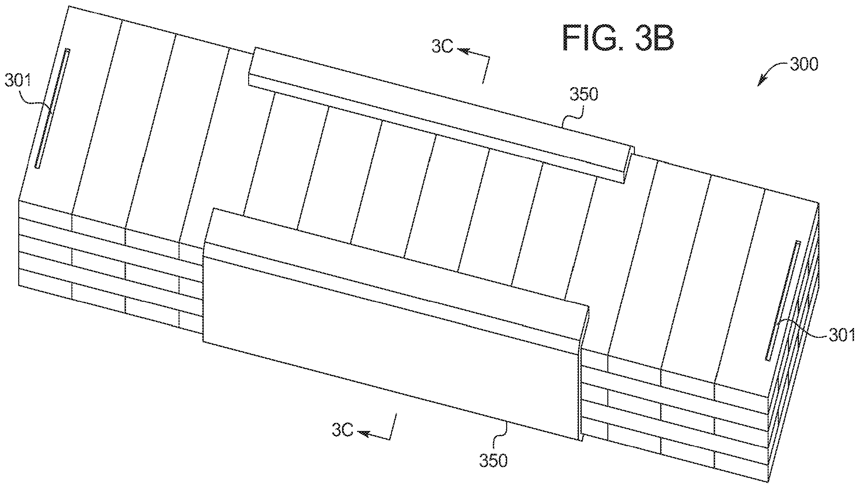

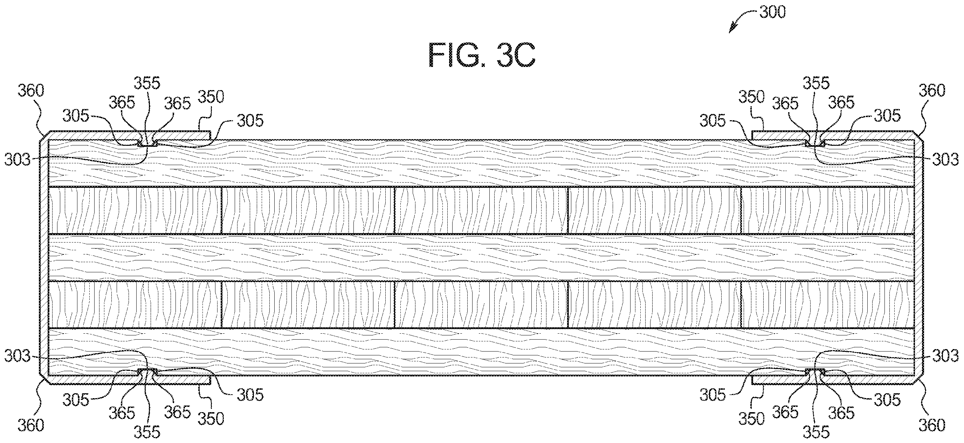

Turning to Figs. 3A-3C there is shown another embodiment of a crane mat. Crane mat **300** includes all of the same features, characteristics, and variations described above for crane mat **100** with the addition of a plurality of slots or grooves **301**,**311** disposed on the top panel **302** and/or bottom panel **310** of crane mat **300**. In this embodiment, panels **302**,**304**,**306**,**308**,**310** of crane mat **300** are identical to panels **102**,**104**,**106**,**108**,**110** of crane mat **100** except that panel **302** is shown as including grooves **301**,**311** disposed thereon. In some embodiments, crane mat **100** may include grooves **301**,**311** as described in more detail below.

In this embodiment, grooves **301** are disposed along the first and last members **312** on top panel **302** and/or the first and last members **312** on bottom panel **310** near the periphery of crane mat **300**. Grooves **301** provide a means for attaching accessories for joining adjacent mats together and for handling and manipulation of crane mat **300** at, for example, the job site. Grooves **301** may also provide a means for engaging with an embodiment of protectors **350** (discussed below) for protecting at least a portion of a longitudinal end of crane mat **300** during handling and use. In this embodiment, grooves **301** are shown as extending along a portion of members **312**. In other embodiments, grooves **301** may extend from one end to the other end of member **312**.

In this embodiment, grooves **311** are disposed on top panel **302** and bottom panel **310** longitudinally and transverse to members **312**, which are generally aligned transverse to members **314**, near the periphery of crane mat **300**. Grooves **311** extend along a portion of the periphery of crane mat **300** for limiting the longitudinal motion of protectors **350** (discussed below) when engaged thereto.

Grooves **311** may comprise generally vertical opposing sidewalls **305** and a generally horizontal bottom wall **303.** In other embodiments, grooves **311** may comprise a U- shape (with or without a rounded bottom wall), a V-shape, a trapezoidal shape, a semi-circular shape, or any other shape or combination thereof that enables engagement with protrusions **355** of protectors **350.** Grooves **311** may comprise any depth up to approximately one half of the thickness of panel **302,310.** In one embodiment, grooves **311** comprise a depth from about0.100" (0.0025m) to about 0.75" (0.02m) . In one embodiment, grooves **311** comprise a depth of about 0.25" (0.006m) +/- 0.150" (0.004m) . In another embodiment, grooves **311** comprise a depth of about 0.50" (0.013m). In another embodiment, grooves **311** comprise a depth of about 0.75" (0.02m).

In this embodiment, crane mat **300** also includes protectors **350** that are removably positionable along the longitudinal sides of crane mat **300.** Protectors **350** are configured for protecting at least a portion of a longitudinal side of crane mat **300** during handling and use. In this embodiment, crane mat **300** includes two protectors **350.** In other embodiments, crane mat**300** may include a greater or fewer number of protectors **350,** and crane mat **300** may include a greater or fewer number of grooves **311.** Protectors **350** may include a longitudinal chamfer **360** of sufficient size along top and bottom outer edges to permit, for example, a forklift operatorto easily insert a forklift blade between two adjacently positioned crane mats **300** having protectors **350** thereon and to separate the two crane mats **300** for subsequent lifting or handling operations.

Protectors **350** may comprise a U-shape to mount over at least a portion of a longitudinal side of crane mat **300.** In other embodiments, protectors **350** may be configured tomount over at least a portion of a transverse side of crane mat **300.** In such embodiments, protectors **350** may be configured to engage with grooves **301.** In this embodiment, protectors **350** are configured for attachment to crane mat **300** via protrusions **355** that are configured to engage with grooves **311**. In other embodiments, protectors **350** are configured for attachment to crane mat **300** via an interference fit with crane mat **300**.

In this embodiment, protrusions **355** are configured with at least one longitudinal chamfer **365** to permit relatively easy installation and removal of protectors **350** from crane mat 300 when, for example, damage to protector **350** occurs necessitating its replacement. In some embodiments, protrusions **355** have a trapezoidal cross sectional shape.

Protectors **350** may be fabricated from any plastic, including polyethylene, polypropylene, polystyrene, polyamide, polyvinyl chloride, and polycarbonate. Protectors **350** may be fabricated from any metal, including steel and aluminum. Protectors **350** may be fabricated from any composite material, including fiber reinforced plastics and metal composites. Protectors **350** may be fabricated from extrusions, injection moldings, stampings, laminations, forgings, castings, and the like.

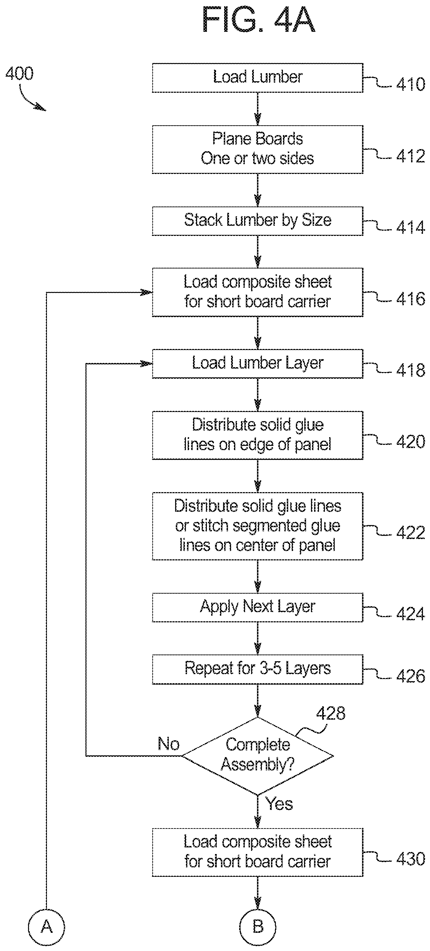

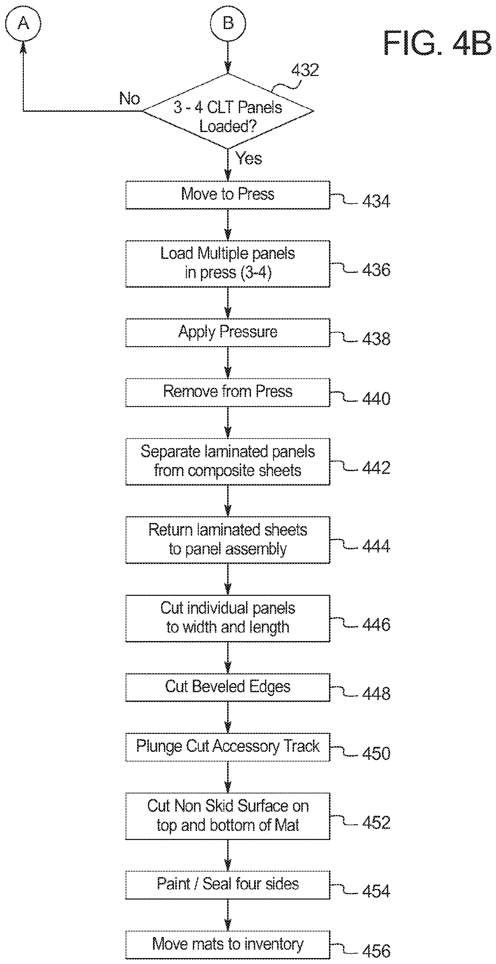

Turning to Figs. 4A-4B, there is shown one embodiment of a method of making a crane mat of the present disclosure comprising an apparatus or system **400**. It should be understood that other types of vehicle or ground protection mats, including access mats, can be manufactured by system **400** using the method disclosed herein. In various embodiments, one or more aspects of system **400** can be merged with one another, omitted, or made part of additional apparatuses or system components. These systems may be configured to fabricate a crane mat billet, which may be further cut or trimmed to meet customer specifications.

In various embodiments, a method of making crane mat **100** includes the steps of (1) receiving lumber of a desired species, cross-sectional dimensions, and length, (2) planing both faces of the lumber to obtain uniform lumber thickness, and to clean and open up the wood fiber on the surface to receive primer and adhesive, (3) priming the planed faces to promote improved adhesion by an adhesive, (4) trimming a group of lumber pieces laid face up and side-by-side to desired peripheral dimensions to form a layer, and in the case of hardwood lumber, drying the lumber surfaces to obtain a desired moisture content of the lumber to coordinate the properties of the lumber with the properties of the chosen adhesive, (5) assembling a group of layers together by (i) perpendicularly orienting respective adjacent layers with respect to one another, (ii) applying adhesive between respective adjacent layers, (iii) applying a compressive force to the assembled layers for a desired period of time to set the adhesive, and (6) cutting the assembled layers to desired dimensions. In some embodiments, multiple 5-layer crane mats **100** are stacked together during the step of applying a compressive force to set the adhesive. In such embodiments, plastic divider panels may be positioned between respective crane mats **100** to act as a separator to ensure that the adhesive does not unintentionally bond adjacent crane mats **100** together.

Turning again to Figs. 4A-4B, dimensional lumber is loaded into or received by system **400** at Step **410** of system **400**. One or more surfaces of the lumber are planed by a planer apparatus at Step **412** of system **400**. System **400** is configured to stack lumber at Step **414** according to size for later retrieval. At Step **416**, system **400** loads a composite sheet for a carrier apparatus of system **400**, after which lumber is loaded side-by-side for a bottom panel of a crane mat at Step **418**.

System **400** may be configured to apply glue to a top surface of the bottom panel in a manner that minimizes adhesive material cost, which may otherwise be a significant expense in the construction of a crane mat. In some embodiments, the panel is moved or conveyed under a stationary glue dispensing apparatus while glue is dispensed from the glue dispensing apparatus onto the panel. In other embodiments, the panel is held stationary while the glue dispensing apparatus traverses over the panel and dispenses glue onto the panel. In some embodiments, a continuous (or in some embodiments a discontinuous) ribbon of glue is applied along the perimeter of a given panel while a solid or a stitched pattern of rows of adhesive is applied to the interior, central area of the top surface of the panel. In one embodiment, system **400** includes stationary adhesive nozzles (or other glue dispensing apparatus) positioned in a row transverse to the longitudinal orientation of the panel. As the panel is conveyed longitudinally by a conveyer, system **400** at Step **420** applies a solid glue line along the lateral and longitudinal perimeter of the top surface of the bottom panel while system **400** at Step **422** simultaneously applies a solid and/or a stitched or intermittent glue line along the central area of the top surface of the bottom panel. If a stitched or intermittent glue line is applied, the interval between glue dots or dashes in the central area is dependent on the speed at which the panel is conveyed under the nozzles as well as the pulse duration of the dispensing of glue from the nozzles. In another embodiment, system **400** includes traversing adhesive nozzles (or other glue dispensing apparatus) positioned in a row transverse to the longitudinal orientation of the panel. As the adhesive nozzles traverse over the stationary panel, system **400** at Step **420** applies a solid glue line along the lateral and longitudinal perimeter of the top surface of the bottom panel while system **400** at Step **422** simultaneously applies a solid and/or a stitched or intermittent glue line along the central area of the top surface of the bottom panel. If a stitched or intermittent glue line is applied, the interval between glue dots or dashes in the central area is dependent on the speed at which the adhesive nozzles traverse over the panel as well as the pulse duration of the dispensing of glue from the nozzles.

At Step **424**, the same glue application technique is performed by system **400** to the next succeeding panel, which will be oriented transverse to the bottom panel, and which is stacked upon the bottom panel. The load, stacking, and gluing process of Steps **418**, **420**, **422**, and **424** is repeated at Steps **426** and **428** for the additional panels that will be stacked to form the desired crane mat. An assembled plurality of laminated, composite panels of a crane mat are then stacked on top of an additional plurality of composite panels of separate crane mats at Steps **430**, **432**, **434**, and **436** and all are pressed in a press system of system **400** at Step **438**. In some embodiments, 3 or 4 sets of crane mats may be pressed at one time in this way. In other embodiments, a greater or fewer number of crane mats may be pressed at the same time.

At Steps **440**, **442**, and **444** the composite panels are removed from the press system of system **400** and separated from one another. At Step **446**, the composite panels of a particular crane mat are cut by one or more cutting machines of system **400** to a desired finished length and width. At Step **448**, the various edges of the crane mat may optionally be beveled by system **400**. For various embodiments of crane mats, at Step **450** one or more routers or plunge cutters of system **400** are configured to cut optional grooves **301**,**311** discussed above on either or both of the top or bottom surfaces of the crane mat. For various embodiments of crane mats, at Step **452** one or more routers or plunge cutters of system **400** are configured to cut optional grooves **201** on either or both of the top or bottom surfaces of the crane mat. At Step **454**, system **400** is configured to optionally paint or seal one or more sides of the crane mat. At Step **456**, the completed crane mat having the desired configuration is moved to inventory.

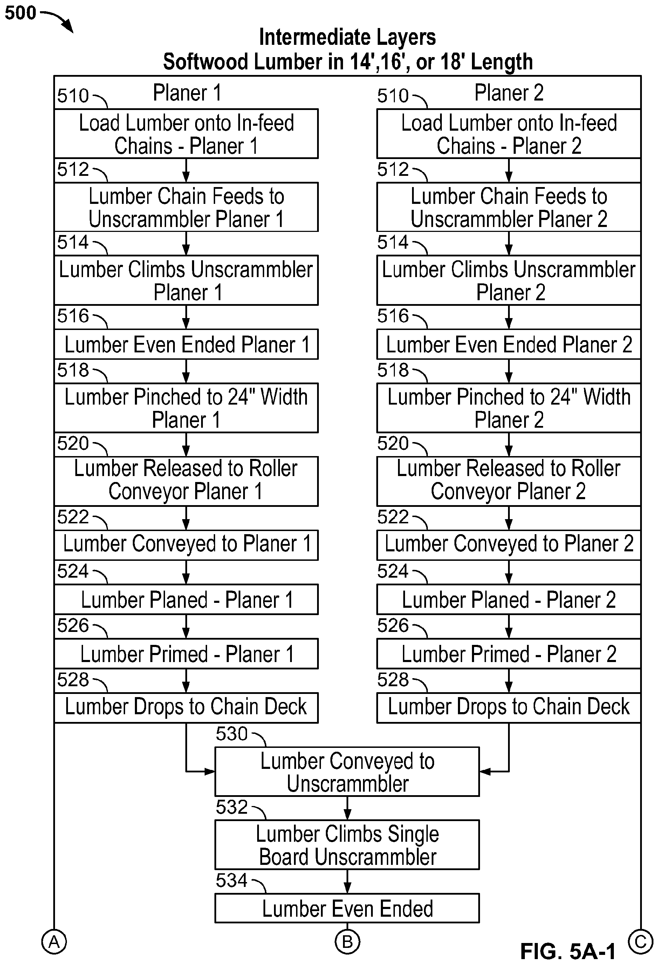

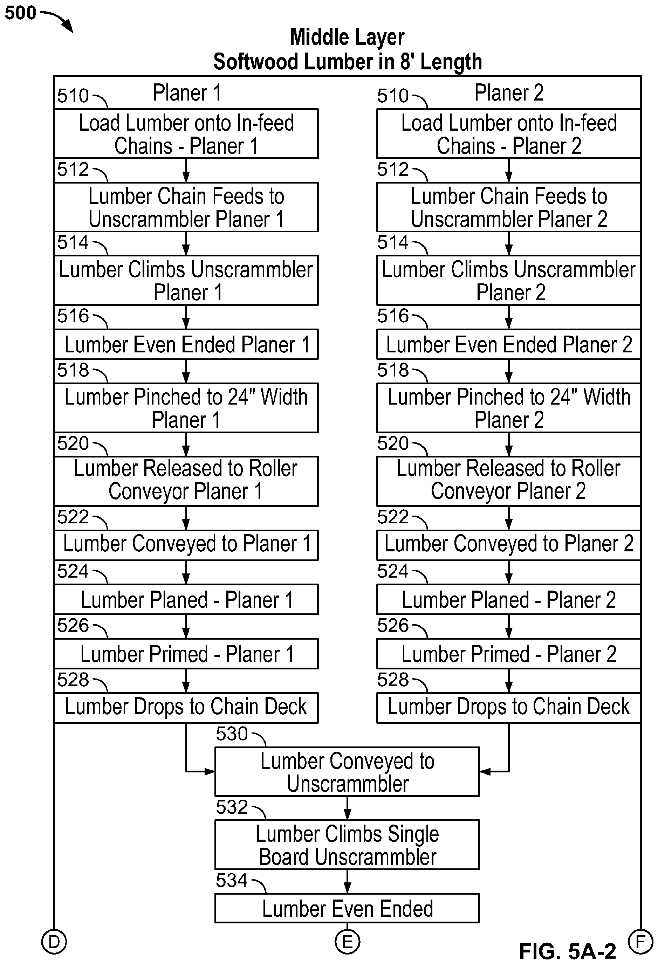

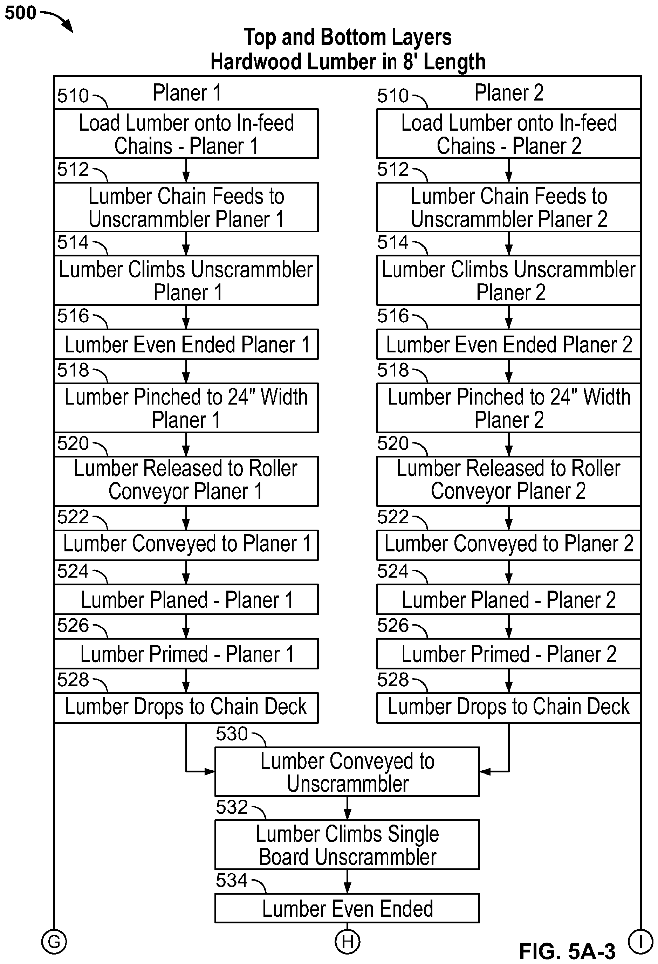

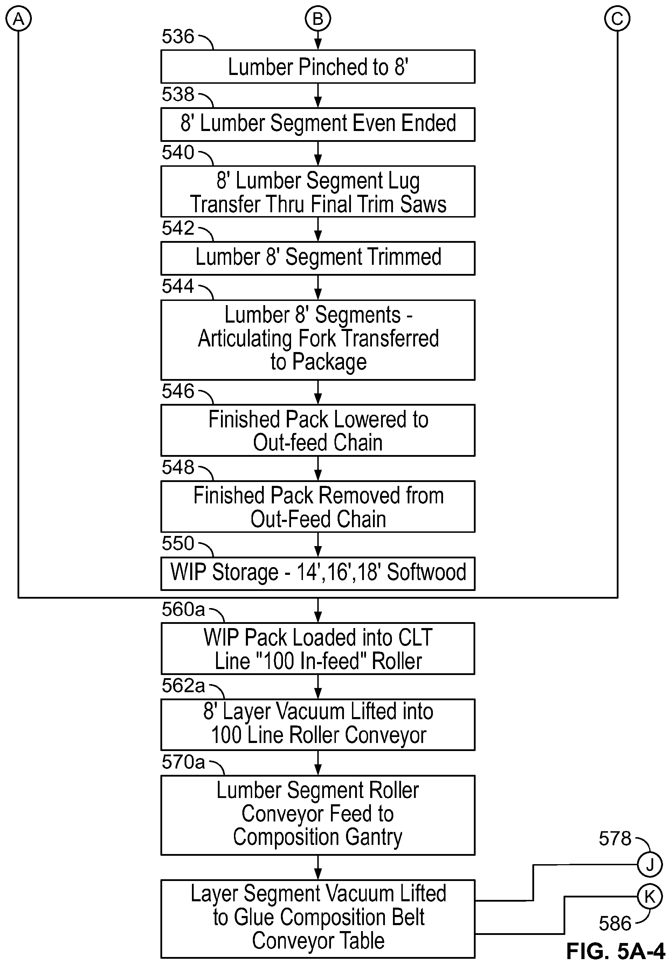

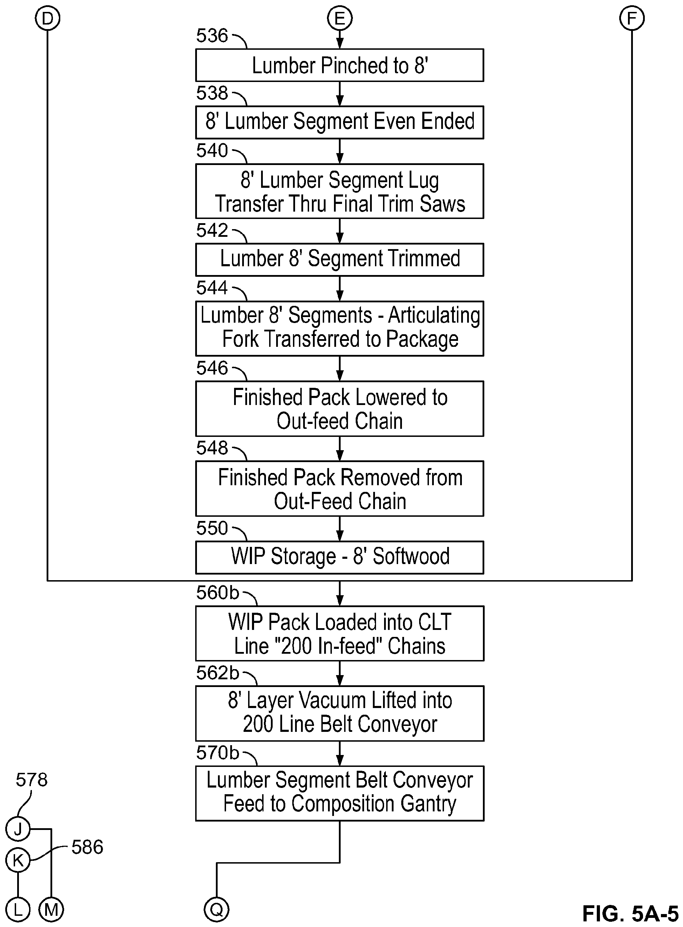

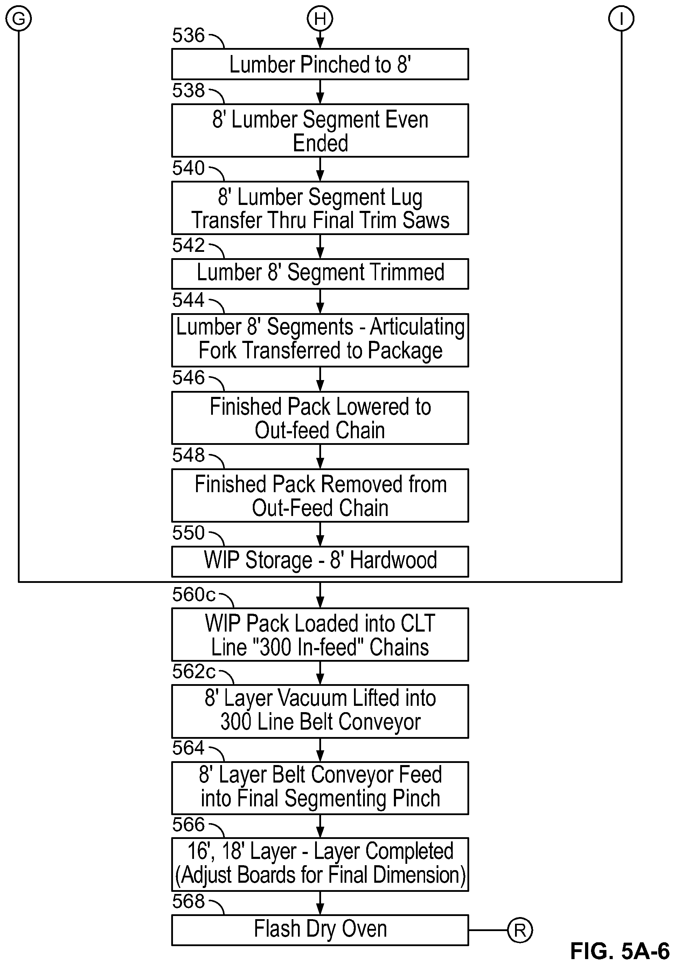

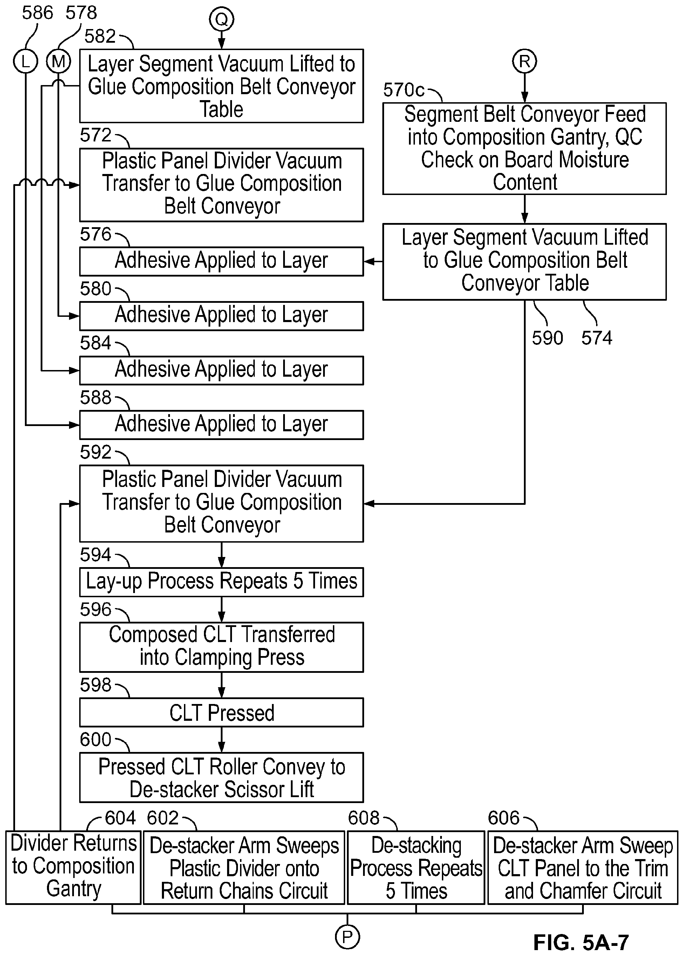

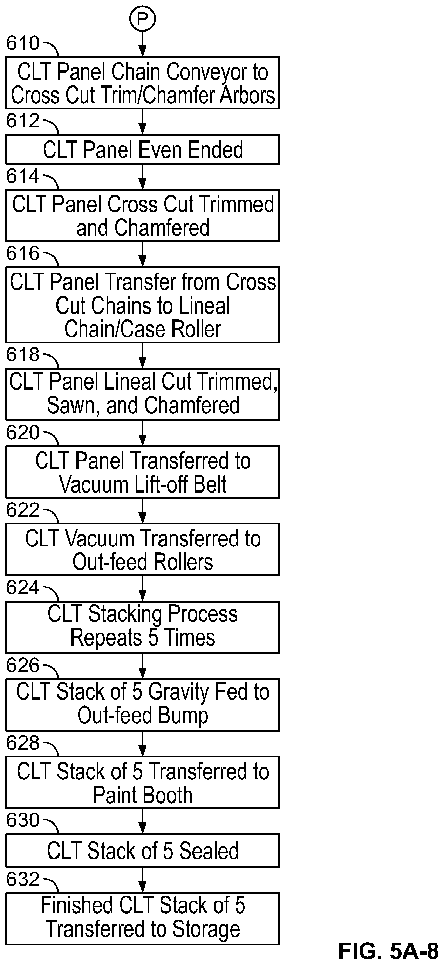

Turning to Figs. 5A1-5A8, there is shown another embodiment of a method of making a crane mat of the present disclosure comprising an apparatus or system **500**. It should be understood that other types of vehicle or ground protection mats, including access mats, can be manufactured by system **500** using the method disclosed herein. In various embodiments, one or more aspects of system **500** can be merged with one another, omitted, or made part of additional apparatuses or system components. These systems may be configured to fabricate a crane mat billet, which may be further cut or trimmed to meet customer specifications. Crane mats comprising any number of layers may be manufactured using the methods disclosed herein. In one embodiment, system **500** is configured to produce a 5-layer crane mat with hardwood top and bottom layers and softwood intermediate layers. In one embodiment, a 5-layer crane mat, such as crane mat **100**, includes 8 ft long hardwood lumber members on the top and bottom layers, 8 ft (2.4m) long southern yellow pine (or other softwood) for the middle layer, and either 16 ft (4.9m) or 18 ft (5.5m) long southern yellow pine (or other softwood) for the two intermediate layers positioned on opposite sides of the middle layer and adjacent to respective hardwood layers. As mentioned above and as discussed below, an 8 ft (2.4m) x 16 ft (4.9m) or 16 ft (4.9m) 5-layer crane mat **100** may be sawed in half to obtain two 4 ft (1.2m) x. 16 ft (4.9m) or 18 ft (5.5m) 5-layer crane mats **100.** System **500** may be used to manufacture 3-layer mats. In one embodiment, a 3-layer mat manufactured by system **500** includes 14 ft (4.3m) long southern yellow pine (or other softwood) lumber members on thetop and bottom layers and 8 ft (2.4m) long southern yellow pine (or other softwood) for the middle layer.ln some embodiments, a 3-layer mat is configured to omit some of the lumber members in the bottom layer to help fixate the mat in place on the ground during use and to reduce or eliminate unintended hydroplaning that may otherwise occur in wet fields.

As shown in the figures, to optimize the production of crane mats, system **500** may have multiple, continuous feed, planer lines, as identified by "planer 1" and "planer 2". In this embodiment, dimensional lumber is loaded into or by system **500** at Step **510** of system **500.** The dimensional lumber may be softwood for one or more middle layers of the crane mat or hardwood for one or more outer layers of the crane mat. As shown in Fig. SA-1, to manufacture an intermediate layer for either a 4 ft (1.2m) x 16 ft (4.9m) 5-layer crane mat or a 4 ft (1.2m) x18 ft (5.5m) 5-layer crane mat, dimensional softwood lumber, such as southern yellow pine, that is 16 ft (4.9m) long or 18 ft (5.5m) long (depending on the desired width of the mat) is loaded into or received by system **500** at Step **510** of system **500.** The softwood may have previously been kiln dried to Southern Pine Inspection Bureau (SPIB) specifications for moisture content to range from approximately 14% to approximately 19%, which lies within the range for use with the adhesive disclosed herein. At Steps **512** and **514,** the lumber is fed via a chain feed mechanism toward an unscrammbler, which orderly orients lumber for entry into the planer. At Step **516,** individual pieces of lumber are positioned side-by-side against a fence on the distal ends of the boards to cause the distal end of each board to be relatively even with one another. At Steps **518, 520** and **522,** the lumber is pinched/grabbed in approximately 24 inch (0.6m) wide groups for conveying to one of twoplaners. In other words, if 2x8 lumber is being used, then approx. 3 boards may be pinched/conveyed to each of the two planers. If 2x10 lumber is being used, then approx. 2 boards may be pinched/conveyed to each of the two planers.

At Steps **524** and **526,** the lumber is conveyed through the planers and primers and planed and primed on at least two sides, for example, the top and bottom faces. At Steps **528, 530,** and **532,** the planed and primed lumber is dropped onto a chain deck and conveyed to an unscrammbler. At Step **534,** individual pieces of lumber are positioned side-by-side against a fence on the distal ends of the boards to cause the distal end of each board to be relatively even with one another. At Step **536,** the lumber members are pinched together side to side to create an 8 ft wide lumber segment or layer, which is even-ended again at Step **538.** This lumber segment or layer is transferred and trimmed at Steps **540** and **542** by crosscutting the longitudinal ends of the boards to obtain a desired length for this lumber segment or layer. Both longitudinal ends of the boards may be sawn to obtain the desired length. At Steps **544, 544, 548,** and **550,** the trimmed lumber segment or layer is conveyed to a stack for work in process (WIP) storage.

As shown in Figs. SA-2 and SA-5, Steps **510** through **550** are repeated for dimensional softwood lumber, such as southern yellow pine, that is 8 ft long for purposes of manufacturing the middle, transverse layer of either a 16 ft wide 5-layer crane mat or an 18 ft Slayer crane mat. In addition, as shown in Figs. SA-3 and SA-6, Steps **510** through **550** are repeated for dimensional hardwood lumber that is 8 ft long for purposes of manufacturing the top and bottom layers of either a 16 ft (4.9m) wide 5-layer crane mat or an 18 ft (5.5m) 5-layer crane mat. In this way, respective softwood and hardwood lumber segments may be inventoried to match thetiming and consumption requirements for assembling 5-layer crane mats of the instant disclosure. In some embodiments, at least approximately 54,000 linear feet of lumber per hour may be planed, primed and stacked in WIP storage.

Turning to Fig. SA-4, at Step **560a,** either a a 16 ft (4.9m) or a 18 ft (5.5m) long softwood lumber segment or layer is pulled from WIP storage and loaded onto an in-feed roller on a portion of the manufacturing line that is designated to receive lumber segments having any of these lengths.
Similarly, at Step **560b,** an 8 ft (2.4m) long softwood lumber segment is pulled from WIP storage andloaded onto in-feed chains on a portion of the manufacturing line that is designated to receivean 8 ft (2.4m) softwood lumber segment. Similarly, at Step **560c,** an 8 ft (2.4m) long hardwood lumber segment is pulled from WIP storage and loaded onto in-feed chains on a portion of the manufacturing line that is designated to receive an 8 ft (2.4m) hardwood lumber segment.

At Step **562a,562b,562c,** lumber segments are vacuum lifted onto either a roller conveyor (14 ft (4.3m), 16 ft (4.9m), or 18 ft (5.5m) long softwood lumber segments) or a belt conveyor (8 ft (2.4m) long softwood and hardwood lumber segments) configured to receive the respective lumber segments. For hardwood lumber segments, at Steps **564, 566,** and **568** (see Fig. SA-6), the conveyor conveys the hardwood lumber segments for final dimensional adjustment and entry into a flash dry oven for adjusting the moisture content of the hardwood lumber to a desired range. The flash dry oven allows for the use of hardwood that is not kiln dried. In some embodiments, hardwood lumber segments are heated in the flash dry oven to reduce the moisture content at the surface of the hardwood lumber segments, from over 30% before heating to approximately 7% to approximately 30% after heating, to ensure desired adhesion ofrespective adjacent lumber segments by an adhesive when positioned therebetween.

At Step **570a,570b,570c,** the softwood and hardwood lumber segments are conveyed by the respective conveyors to a composition gantry for assembly of the desired crane mat configuration. For hardwood lumber conveyed from the flash dry oven to the composition gantry, moisture content is verified, via one or more sensors, to lie within desired parameters before assembly.

Assembly of a plurality of 5-layer crane mats, for example, begins at Step **572** (see Fig. SA-7) by vacuum lifting and positioning a plastic divider panel on a glue composition belt conveyor table. The glue composition belt conveyor table is configured to automatically index vertically downward to receive successive lumber or plastic divider panels. The plastic divider panel may be made from high density polyethylene (HOPE) and be configured to be approximately 0.50 inch (0.013m) thick. The plastic divider panel may be sized to slightly exceed the planform size of the crane mat being manufactured to allow sensors to detect the existence and position of the plastic divider panels. The adhesive described below has been found to resist sticking to the HOPE divider panel, which allows the divider panel to act as a barrier to the adhesive when separating multiple assembled stacks of crane mats following the clamping process described below. At Step **574,** after the glue composition belt conveyor table has been indexed downwardly, a first, bottom layer comprising hardwood lumber is then vacuum lifted and positioned on top of the plastic divider panel. At Step **576,** a layer of adhesive is applied to desired portions on top of the first, bottom layer of hardwood lumber.

At Step **578** (Fig. SA-4), after the glue composition belt conveyor table has been indexed downwardly, a first, intermediate layer comprising softwood, such as southern yellow pine, that is either 16 ft (4.9m) or 18 ft (5.5m) long, for example, is then vacuum lifted and positioned on top ofthe first, bottom layer. At Step **580,** a layer of adhesive is applied to desired portions on top of the first, intermediate layer of softwood lumber.

At Step **582** (Fig. SA-7), after the glue composition belt conveyor table has been indexed downwardly, a middle intermediate layer comprising softwood, such as southern yellow pine, that is 8 ft (2.4m) long is then vacuum lifted and positioned on top of the first, intermediate layer of softwood lumber. At Step **584** (Fig. SA-7), a layer of adhesive is applied to desired portions on top of the middle intermediate layer of softwood lumber.

At Step **586,** after the glue composition belt conveyor table has been indexed downwardly, a second, intermediate layer comprising softwood, such as southern yellow pine, that is either 16 ft (4.9m) or 18 ft (5.5m) long, for example, is then vacuum lifted and positioned on top of the middle intermediate layer. At Step **588,** a layer of adhesive is applied to desired portions on topof the second, intermediate layer of softwood lumber.

At Step **590,** after the glue composition belt conveyor table has been indexed downwardly, a last, top layer comprising hardwood lumber is then vacuum lifted and positioned on top the second, intermediate layer of softwood lumber. At Step **592,** after the glue composition belt conveyor table has been indexed downwardly, a plastic divider panel is vacuum lifted and positioned on top of the last, top layer comprising hardwood lumber. As shown at Step **594,** the process of stacking and applying adhesive (ref. Steps **574** through **592)** is repeated a total of 5 times. When manufacturing 3-layer mats using system **500,** the process of stacking may be repeated a total of 8 times to match the capacity of the presses.

At Step **596,** the assembled stack of 5-layer crane mats is transferred to one of three clamping presses, and at Step **598,** the stack is pressed and held in compression for approximately 25 minutes or to a desired time to allow the adhesive to set a desired amount. In this embodiment, the three presses are connected to one another and are configured to laterally traverse and index into position so that an available one of the presses receives the assembled stack from the conveyor. The use of three presses allows for matching the assembly of respective stacks of crane mats with the "open time" and with the clamp time of the adhesive.

For purposes of this disclosure, a suitable adhesive is Purbond HB-E102/UR5151 from Henkel Adhesives Corp. This adhesive provides for an "open time" of 10 minutes before the adhesive skins over and before which the assembled stack must be clamped to provide a proper bond. After a stack of crane mats have been assembled, within the 10 minute open time an available one of the three presses traverses laterally into a position to receive the assembled stack. The press then compresses the stack for approximately 25 minutes. While the adhesive in that assembled stack is curing, another assembled stack is being made by system **500**. Within the 10 minute open time for the adhesive, another one of the three presses traverses laterally into a position to receive the next assembled stack. The press then compresses the stack for approximately 25 minutes. The process occurs again for a third assembled stack. After a fourth assembled stack of crane mats has been assembled, the adhesive has been cured to a desired state in the first assembled stack. The first assembled stack leaves the first press just in time for the first press to receive the fourth assembled stack. A continuous stream of crane mats may be manufactured in this way. In some embodiments, a total of five 5-layer crane mats **100**, together with plastic divider panels positioned therebetween, may be assembled and stacked on top of one another before 9 minutes and 30 seconds elapses. This allows for at least approximately 30 seconds to transfer the assembled stack to one of the available presses and to initiate the compressive force on the stack before the 10 minute "open time" of the adhesive is exceeded.

The clamping presses are further configured to adjust the clamping load according to the size of the assembled stack. For example, if a stack of 14 ft 3-layer mats is received by the press, a computer control system is configured to engage a hydraulic cylinder to apply a predetermined compressive load to the assembled stack. By contrast, if a stack of 16 ft 5-layer crane mats is received by the press, the computer control system is configured to engage a hydraulic cylinder (and possibly a different hydraulic cylinder if the press is equipped with multiple cylinders) to apply a different predetermined compressive load to the assembled stack.

At Step **600**, a pressed crane mat stack is conveyed from one of the presses to a de-stacker scissor lift that is configured to automatically index vertically upward, whereupon a de-stacker arm at Step **602** sweeps a plastic divider panel onto a return chain circuit to convey the plastic divider panel at Step **604** back to the composition gantry. At Step **606**, after the de-stacker scissor lift has been indexed updwardly, a pressed 5-layer crane mat is moved by the de-stacker arm to the trim and chamfer circuit for final processing. As shown at Step **608**, the de-stacking process repeats 5 times (or for as many times as there are pressed crane mats and plastic divider panels to de-stack).

At Steps **610**, **612**, and **614**, each of the pressed, 5-layer crane mats is conveyed to a cross-cut and trim station whereupon the 5-layer crane mat is even-ended, trimmed to a finished length, and chamfered along peripheral edges. At Steps **616**, and **618,** each of the pressed, 5-layer crane mats is conveyed to a lineal cut and trim station whereupon the 5-layer crane mat is ripped along the centerline to divide the 8 ft x 16 ft or 18 ft billet to become two, 4 ft x 16 ft or 18 ft crane mats. Additional chamfering of the peripheral edges is completed at this step. The ripping and chamfering in this embodiment are performed by saws that are fixed in position while the crane mats are conveyed past the saws in a pre-programmed fashion.

At Steps **620**, **622**, and **624**, the fully sawn and trimmed 5-layer crane mats are conveyed and transferred via a vacuum lifter to out-feed rollers and stacked until 5 crane mats have been accumulated. At Step **626**, the stack of 5 crane mats are gravity fed to an out-feed bump. At Steps **628** and **630**, the 5 crane mats are transferred to a paint booth and painted on all 4 exposed sides and ends to protect the end grain of the boards from absorbing moisture. A suitable protectant is Anchorseal^{®} from UC-Coatings, LLC. At Step **532**, the sealed set of 5 crane mats may be transferred to inventory for sale. Crane mats **100** made using the systems and methods disclosed herein allow for the bonding together of dissimilar lumber materials, such as hardwood and softwood, and in a continuous stream of production.

One or more aspects of systems **400** and **500** are operable by one or more computers and/or one or more programmable logic controllers (PLC's). The computers and/or PLC's may be coupled with one or more sensors configured for reporting position, measurements, status, and other data regarding elements of systems **400** and **500** and the crane mats being fabricated, and motors, actuators and the like for controlling the operation of one or more aspects of systems **400** and **500**. The computers and/or PLC's may be connected to one another and to other computers or devices via a wired or wireless network. These devices may be connected to one or more remote computers and/or web servers via a wired or wireless connection to the Internet.

The computers and one or more PLC's include a processor, such as a central processing unit (CPU), for executing software, particularly software stored in memory or on any computer readable medium, for use by or in connection with any computer related system or method.

A computer readable medium includes any electronic, magnetic, optical, or other physical device or apparatus that can contain or store a computer program for use by or in connection with a computer related system or method. Memory can include any one or a combination of volatile memory elements (e.g., random access memory (RAM, such as DRAM, SRAM, SDRAM, etc.)) and nonvolatile memory elements (e.g., ROM, hard drive, tape, CDROM, etc.). Moreover, memory may incorporate electronic, magnetic, optical, and/or other types of storage media. Memory can have a distributed architecture where various components are situated remote from one another, but are still accessed by a processor.

The software may include one or more separate programs comprising ordered listings of executable instructions for implementing logical functions. The software stored in memory or on any computer readable medium may include one or more computer programs, each including executable instructions executed by the processor. An operating system may control the execution of other computer programs and can provide scheduling, input-output control, file and data management, memory management, and communication control and related services.

In one embodiment, the PLC may include a computer processor such as a central processing unit (CPU), memory, operating software stored in memory, and various input and output (I/O) devices or data paths. The I/O devices may include input devices, such as a keyboard, mouse, touch screen, and/or any other user interface. The I/O devices may also include output devices, such as a computer display, a modem, a router, serial and parallel wired and wireless communication components and any other elements needed to connect to, for example, another computer or device via a local network or the Internet whether wired or wirelessly. The I/O devices may further include any element or device in a feedback control system for controlling the operation and performance of any aspect of systems **400** and **500**.

While specific embodiments have been described in detail, it will be appreciated by those skilled in the art that various modifications and alternatives to those details could be developed in light of the overall teachings of the disclosure. Accordingly, the disclosure herein is meant to be illustrative only and not limiting as to its scope and should be given the full breadth of the appended claims and any equivalents thereof.

## Claims

1. A method of making a crane mat comprising a length that is longer than a width, comprising:
(a) vacuum lifting and positioning a divider panel on an indexing table and vacuum lifting and positioning on the automatically vertically indexing table a first panel to receive a plurality of panels thereon, wherein the plurality of panels are positioned on one another in alternating transverse directions with respect to one another ;
the first panel comprising a plurality of lumber members positioned side-by-side, each of the plurality of lumber members being oriented in a first direction that is parallel to the width; and the plurality of lumber members in a top panel and a plurality of lumber members in a bottom panel are oriented in a transverse direction;
(b) dispensing an adhesive on a top surface of the first panel;
(c) vertically positioning the indexing table to receive a second panel;
(d) vacuum lifting and positioning the second panel on the top surface of the first panel, the second panel comprising a plurality of second lumber members positioned side-by-side,
(e) wherein each of the plurality of second lumber members being oriented in a second direction that is parallel to the length;
(f) dispensing an adhesive on a top surface of the second panel;
(g) vertically positioning the indexing table to receive a third panel;
(h) vacuum lifting and positioning the third panel on the top surface of the second panel, the third panel comprising a plurality of third lumber members positioned side-by-side, each of the plurality of third lumber members being oriented in the first direction;
(i) dispensing an adhesive on a top surface of the third panel;
(j) vertically positioning the indexing table to receive a fourth panel;
(k) vacuum lifting and positioning the fourth panel on the top surface of the third panel, the fourth panel comprising a plurality of fourth lumber members positioned side-by-side, each of the plurality of fourth lumber members being oriented in the second direction;
(l) dispensing an adhesive on a top surface of the fourth panel;
(m) vertically positioning the indexing table to receive a fifth panel;
(n) vacuum lifting and positioning the fifth panel on the top surface of the fourth panel, the fifth panel comprising a plurality of fifth lumber members positioned side-by-side, each of the plurality of fifth lumber members being oriented in the first direction;
(o) applying a compressive force to the first, second, third, fourth and fifth panels as a unit until the adhesive is set; and
(p) cutting the unit to desired peripheral dimensions.

2. The method of Claim 1, including the step of vacuum lifting and positioning a divider panel after step (n).

3. The method of Claim 2, including repeating steps (a) through (o) at least four times to form a stack of at least five units, wherein each of the units is separated by a divider panel, and applying the compressive force to the stack of at least five units until the adhesive is set.

4. The method of Claim 3, including the step of de-stacking the units before cutting.

5. The method of Claim 1, wherein the step of applying the compressive force to the unit includes applying pressure for approximately 25 minutes.

6. The method of Claim 1, wherein the first and the fifth panels comprise hardwood lumber and the second, the third, and the fourth panels comprise softwood lumber.

7. The method of Claim 1, including the step of planing a top and a bottom face of each of the first, the second, the third, the fourth, and the fifth lumber members before initiating step (a).

8. The method of Claim 1, including the step of forming the first panel, the second panel, the third panel, the fourth panel, and the fifth panel by positioning the respective plurality of first, second, third, fourth, and fifth lumber members side-by-side.

## Patentansprüche

1. Verfahren zum Herstellen eines hölzernen Fundamentrahmens eines Krans, umfassend eine Länge, die länger als eine Breite ist, umfassend:
(a) Vakuumheben und Positionieren einer Teilerplatte auf einem Schalttisch und Vakuumheben und Positionieren auf dem automatisch vertikal Schalttisch einer ersten Platte, um eine Vielzahl von Platten darauf aufzunehmen, wobei die Vielzahl von Platten in abwechselnden Querrichtungen hinsichtlich zueinander positioniert sind;
die erste Platte umfassend eine Vielzahl von Holzelementen, die nebeneinander positioniert sind, wobei jedes der Vielzahl von Holzelementen in einer ersten Richtung ausgerichtet ist, die parallel zu der Breite ist; und die Vielzahl von Holzelementen in einer oberen Platte und eine Vielzahl von Holzelementen in einer unteren Platte in einer Querrichtung ausgerichtet sind;
(b) Abgeben eines Klebstoffs auf eine obere Oberfläche der ersten Platte;
(c) vertikal Positionieren des Schalttisches, um eine zweite Platte aufzunehmen;
(d) Vakuumheben und Positionieren der zweiten Platte auf der oberen Oberfläche der ersten Platte, die zweite Platte umfassend eine Vielzahl von zweiten Holzelementen, die nebeneinander positioniert sind,
(e) wobei jedes der Vielzahl von zweiten Holzelementen in einer zweiten Richtung ausgerichtet ist, die parallel zu der Länge ist;
(f) Abgeben eines Klebstoffs auf eine obere Oberfläche der zweiten Platte;
(g) vertikal Positionieren des Schalttisches, um eine dritte Platte aufzunehmen;
(h) Vakuumheben und Positionieren der dritten Platte auf der oberen Oberfläche der zweiten Platte, die dritte Platte umfassend eine Vielzahl von dritten Holzelementen, die nebeneinander positioniert sind, wobei jedes der Vielzahl von dritten Holzelementen in der ersten Richtung ausgerichtet ist;
(i) Abgeben eines Klebstoffs auf eine obere Oberfläche der dritten Platte;
(j) vertikal Positionieren des Schalttisches, um eine vierte Platte aufzunehmen;
(k) Vakuumheben und Positionieren der vierten Platte auf der oberen Oberfläche der dritten Platte, die vierte Platte umfassend eine Vielzahl von vierten Holzelementen, die nebeneinander positioniert sind, wobei jedes der Vielzahl von vierten Holzelementen in der zweiten Richtung ausgerichtet ist;
(l) Abgeben eines Klebstoffs auf eine obere Oberfläche der vierten Platte;
(m) vertikal Positionieren des Schalttisches, um eine fünfte Platte aufzunehmen;
(n) Vakuumheben und Positionieren der fünften Platte auf der oberen Oberfläche der vierten Platte, die fünfte Platte umfassend eine Vielzahl von fünften Holzelementen, die nebeneinander positioniert sind, wobei jedes der Vielzahl von fünften Holzelementen in der ersten Richtung ausgerichtet ist;
(o) Aufbringen einer Druckkraft auf die erste, die zweite, die dritte, die vierte und die fünfte Platte als eine Einheit, bis der Klebstoff erhärtet ist; und
(p) Schneiden der Einheit auf gewünschte Umfangsabmessungen.

2. Verfahren nach Anspruch 1, das den Schritt des Vakuumhebens und Positionierens einer Teilerplatte nach Schritt (n) einschließt.

3. Verfahren nach Anspruch 2, das ein Wiederholen der Schritte (a) bis einschließlich (o) mindestens viermal einschließt, um einen Stapel von mindestens fünf Einheiten auszubilden, wobei jede der Einheiten durch eine Teilerplatte getrennt ist und Aufbringen der Druckkraft auf den Stapel von mindestens fünf Einheiten, bis der Klebstoff erhärtet ist.

4. Verfahren nach Anspruch 3, das den Schritt des Entstapelns der Einheiten vor dem Schneiden einschließt.

5. Verfahren nach Anspruch 1, wobei der Schritt des Aufbringens der Druckkraft auf die Einheit das Aufbringen von Druck für etwa 25 Minuten einschließt.

6. Verfahren nach Anspruch 1, wobei die erste und die fünfte Platte Hartholzholz umfassen und die zweite, die dritte und die vierten Platte Weichholzholz umfassen.

7. Verfahren nach Anspruch 1, das den Schritt des Hobelns einer oberen und einer unteren Fläche jedes des ersten, des zweiten, des dritten, des vierten und des fünften Holzelements einschließt, bevor Schritt (a) eingeleitet wird.

8. Verfahren nach Anspruch 1, das den Schritt des Ausbildens der ersten Platte, der zweiten Platte, der dritten Platte, der vierten Platte und der fünften Platte durch Positionieren der jeweiligen Vielzahl des ersten, des zweiten, des dritten, des vierten und des fünften Holzelements nebeneinander einschließt.

## Revendications

1. Procédé de fabrication d'un platelage de grue comprenant une longueur qui est plus longue qu'une largeur, comprenant :
(a) le levage par le vide et le positionnement d'un panneau de séparation sur une table d'indexation et le levage par le vide et le positionnement sur la table à indexation automatique verticale d'un premier panneau pour recevoir une pluralité de panneaux sur celle-ci, la pluralité de panneaux étant positionnés les uns sur les autres dans des directions transversales alternées les uns par rapport aux autres ;
le premier panneau comprenant une pluralité d'éléments en bois d'oeuvre positionnés côte à côte, chacun parmi la pluralité d'éléments en bois d'oeuvre étant orienté dans une première direction qui est parallèle à la largeur ; et la pluralité d'éléments en bois d'oeuvre dans un panneau supérieur et une pluralité d'éléments en bois d'oeuvre dans un panneau inférieur sont orientées dans une direction transversale ;
(b) la distribution d'un adhésif sur une surface supérieure du premier panneau ;
(c) le positionnement vertical de la table d'indexation pour recevoir un deuxième panneau ;
(d) le levage par le vide et le positionnement du deuxième panneau sur la surface supérieure du premier panneau, le deuxième panneau comprenant une pluralité de deuxièmes éléments en bois d'oeuvre positionnés côte à côte,
(e) dans lequel chacun parmi la pluralité de deuxièmes éléments en bois d'oeuvre est orienté dans une seconde direction qui est parallèle à la longueur ;
(f) la distribution d'un adhésif sur une surface supérieure du deuxième panneau ;
(g) le positionnement vertical de la table d'indexation pour recevoir un troisième panneau ;
(h) le levage par le vide et le positionnement du troisième panneau sur la surface supérieure du deuxième panneau, le troisième panneau comprenant une pluralité de troisièmes éléments en bois d'oeuvre positionnés côte à côte, chacun parmi la pluralité de troisièmes éléments en bois d'oeuvre étant orienté dans la première direction ;
(i) la distribution d'un adhésif sur une surface supérieure du troisième panneau ;
(j) le positionnement vertical de la table d'indexation pour recevoir un quatrième panneau ;
(k) le levage par le vide et le positionnement du quatrième panneau sur la surface supérieure du troisième panneau, le quatrième panneau comprenant une pluralité de quatrièmes éléments en bois d'oeuvre positionnés côte à côte, chacun parmi la pluralité de quatrièmes éléments en bois d'oeuvre étant orienté dans la seconde direction ;
(l) la distribution d'un adhésif sur une surface supérieure du quatrième panneau ;
(m) le positionnement vertical de la table d'indexation pour recevoir un cinquième panneau ;
(n) le levage par le vide et le positionnement du cinquième panneau sur la surface supérieure du quatrième panneau, le cinquième panneau comprenant une pluralité de cinquièmes éléments en bois d'oeuvre positionnés côte à côte, chacun parmi la pluralité de cinquièmes éléments en bois d'oeuvre étant orienté dans la première direction ;
(o) l'application d'une force de compression aux premier, deuxième, troisième, quatrième et cinquième panneaux en tant qu'unité jusqu'à ce que l'adhésif soit figé ; et
(p) le découpage de l'unité aux dimensions périphériques souhaitées.

2. Procédé selon la revendication 1, comportant l'étape de levage par le vide et de positionnement d'un panneau de séparation après l'étape (n).

3. Procédé selon la revendication 2, comportant la répétition des étapes (a) à (o) au moins quatre fois pour former un empilement d'au moins cinq unités, chacune des unités étant séparée par un panneau de séparation, et l'application de la force de compression à l'empilement d'au moins cinq unités jusqu'à ce que l'adhésif soit figé.

4. Procédé selon la revendication 3, comportant l'étape de désempilement des unités avant découpage.

5. Procédé selon la revendication 1, dans lequel l'étape d'application de la force de compression à l'unité comporte l'application de pression pendant approximativement 25 minutes.

6. Procédé selon la revendication 1, dans lequel les premier et cinquième panneaux comprennent du bois d'oeuvre dur et les deuxième, troisième et quatrième panneaux comprennent du bois d'oeuvre tendre.

7. Procédé selon la revendication 1, comportant l'étape de rabotage d'une face supérieure et d'une face inférieure de chacun des premiers, deuxièmes, troisièmes, quatrièmes et cinquièmes éléments en bois d'oeuvre avant d'entamer l'étape (a).

8. Procédé selon la revendication 1, comportant l'étape de formation du premier panneau, du deuxième panneau, du troisième panneau, du quatrième panneau et du cinquième panneau en positionnant la pluralité respective de premiers, deuxièmes, troisièmes, quatrièmes et cinquièmes éléments en bois d'oeuvre côte à côte.
